# EUROPEAN PATENT SPECIFICATION

(11) **EP 4 199 714 B1**
(45) Date of publication and mention of the grant of the patent: **11.02.2026**
(21) Application number: 21857923.3
(22) Date of filing: 18.08.2021
(51) Int. Cl.: A01N 1/142, A01N 1/145, A01N 1/162

(54) **METHOD FOR ORGAN PRESERVATION**
VERFAHREN ZUR ORGANKONSERVIERUNG
PROCÉDÉ DE CONSERVATION D'ORGANES

(30) Priority: 18.08.2020 US 202063066925 P
(43) Date of publication of application: 28.06.2023
(73) Proprietor: Ichilov Tech Ltd., 6423906 Tel-Aviv (IL); A.A. Cash Technology Ltd., 6226618 Tel Aviv (IL)
(72) Inventor: SHANI, Nir, 4720535 Ramat Hasharon (IL); GUR, Eyal, 6579126 Tel Aviv (IL); LI, Shujun, 6423906 Tel-Aviv (IL); FRIEDMAN, Or, 4730602 Ramat HaSharon (IL); ARAV, Amir, 6226618 Tel Aviv (IL)
(74) Representative: Boult Wade Tennant LLP
(86) International application number: PCT/IL2021/051009
(87) International publication number: WO 2022/038607

(56) References cited:
- WO-A1-2017/122210
- WO-A2-2019/142047
- CN-B- 101 463 340
- US-A- 4 865 871
- US-A1- 2018 092 348
- YAVIN ET AL: "Measurement of essential physical properties of vitrification solutions", THERIOGENOLOGY, LOS ALTOS, CA, US, vol. 67, no. 1, 6 December 2006 (2006-12-06), pages 81 - 89, XP005794543, ISSN: 0093-691X, DOI: 10.1016/J.THERIOGENOLOGY.2006.09.029
- ARAV AMIR ET AL: "Long-Term Survival and Functional Recovery of Cryopreserved Vascularized Groin Flap and Below-the-Knee Rat Limb Transplants", REJUVENATION RESEARCH, vol. 26, no. 5, 13 October 2023 (2023-10-13), US, pages 180 - 193, XP093184492, ISSN: 1549-1684, DOI: 10.1089/rej.2023.0022

## Description

### FIELD OF THE INVENTION

The present invention relates to controlled freezing of biological material, e.g., a tissue.

### BACKGROUND

The main principle guiding modern medical reconstruction is the replacement of "like with like". In accordance, injured or deformed body parts are replaced with their similar uninjured counterparts. Despite the significant advances made in the field in recent decades, reconstruction is still restricted by the limited number and complexity of available autologous (i.e., "self") replacement parts. During major trauma, this restriction worsen in correlation with the size and complexity of injured tissue further limiting donor site availability. Injuries affecting composite defects, consisting of several different tissues, such as limb amputation or massive facial injury, cannot be replaced with autologous tissues and require the use of allogeneic (i.e., "foreign") donated tissue, as was recently demonstrated in the rapidly evolving vascular composite allotransplantation (VCA) field. Despite its impressive successes in limb and face transplantations, the VCA field is hindered by the strong immune rejection of transplanted composite tissue (higher than in any other field in transplantation) requiring high dose life-long immunosuppression regime to ensure allograft survival that can result in severe and even life-threatening adverse effects.

Immediate autologous limb replantation or microsurgical reconstruction using amputated tissue (i.e. nerve, tendon and vascularized skin flaps and bone grafts) following trauma would be highly beneficial and may even spare the need for VCA removing the need for obligate use of immunosuppression. However, immediate re-transplantation of autologous limbs or tissues is rarely possible because acute resuscitation and lifesaving procedures, according to the "life before limb" strategy, take precedent, and because of the short limb ischemia window (4-6 hours). Time constrains are further enhanced under combat surgical conditions which make the complex microsurgical replantation or microsurgical reconstruction, which require specific operating room equipment and a trained microsurgical team practically impossible.

One approach that would allow the use of autologous tissue for reconstructive purposes would be to preserve its viability until patient condition permits reconstructive surgery. In most modern trauma and combat injuries, such as contaminated wounds, the first 12 hours are dedicated for damage control and the most emergent vascular and orthopedic interventions. Within a day or two after injury some reconstructive efforts may be attempted in selected patients, yet most of these complicated reconstructive procedures may be attempted only days to weeks after the injury. Technological modifications such as ex-vivo perfusion and sub-zero preservation may aid in extending the time between harvest and transplantation of solid organs. Yet, the optimistic range of extending graft survival using these technologies does not extend beyond 24 hours and to 96 hours for liver grafts, respectively. To date, the only methods suggested for long-term (days to months) organ or tissue preservation are low sub-zero cryopreservation by either directional freezing (DF) or vitrification both based on cryopreservation of living tissues under temperatures below (-80 °C). DF has been used successfully to cryopreserve a variety of tissues including sheep ovaries, human ovaries, rat and pig whole livers, and rat hearts. Vitrification has been utilized to successfully cryopreserve rabbit kidneys, blood vessel, cornea, and valves. The successful transplant of a complete rat hind limb following its 7-day cryopreservation by both DF and vitrification, was recently reported, however limb survival was demonstrated only for a period of 72 hours.

The main challenge of cryopreservation lies in preventing the damage induced by the formation of intra and extracellular ice crystals produced by conventional cryopreservation methods.

Vitrification is the solidification of liquid into a solid glassy phase. Tissue vitrification is achieved by rapid cooling and rapid warming of tissues in the presence of high concentrations of cryoprotectants (CPAs). The probability of vitrification = CR or WR × µ × 1/V; the probability of vitrification increases with the increasing of cooling/warming rate (CR or WR) and with the increasing of the viscosity (µ) and with the decreasing of volume (V). These conditions allow the cryopreservation of cells and tissues with no ice formation prior to their transformation into a glassy form, thereby drastically reducing freezing damage. Despite its immense potential in cryopreservation, vitrification suffers from 3 major disadvantages that thus far precluded its use for large tissues/organs: (1) Rapid homogenous cooling and warming, which is require for minimal ice nucleation and growth, is highly challenging in large tissues; (2) High concentrations of CPAs, which are required for successful tissue vitrification, may cause irreversible tissue toxicity and osmotic damages if not introduced and removed rapidly; and (3) Rapid cooling beyond the glassy phase transition temperature (Tg') leads to tissue fracturing. The fastest available cooling method is by liquid nitrogen (LN) slush (-204 °C - (-210 °C)). To achieve LN slush, the LN needs to be cooled nearly to its freezing point (-210 °C). LN slush is generated by applying negative pressure, thereby reducing the temperature of the LN to between -205 °C to -210 °C. LN slush is then formed, and the cooling rate is dramatically increased. The cooling rate is especially enhanced in the first stage of cooling when cooling down from room temperature to 0 °C. The cooling rate is enhanced two to six times more than plunging to LN (-196 °C).

Increasing the CR or WR and µ will increase probability of vitrification, however it will also increase the probability of fracturing. This is because the increasing of viscosity (µ) will increase also Tg' which will increase the CR or WR due to the increase in ΔT. Vitrification was successful thus far only in cryopreservation of cells and small tissues, oocytes, sperm, embryos and ovarian slices, blood vessel, cornea, valves, and rabbit kidney.

US 2018/092348 Al discloses a method for cryo-preserving a biological sample, which comprises a vitrification and which may consist of a two-step cooling process.

There is still a great need for a method of vitrification that will allow long-term cryopreservation of large tissues such composite vascularized tissues e.g., limbs and organs, which will enable their long-term survival following syngeneic re-transplantation.

### SUMMARY

The present invention is directed to a two-step method for cryopreserving a biological sample, e.g., a tissue, comprising a rapid and short deep-freezing step followed by a gradual longer freezing step.

The present invention is based in part on the surprising findings that tissues cryopreserved according to the herein disclosed method provided long-term survival following syngeneic re-transplantation.

The method of the invention, comprises a first seconds-long (e.g., rapid) freezing step, which brings the biological sample to a sub-zero temperature, followed by a second minutes-long (e.g., gradual) freezing step, which brings the biological sample to the glass-transition point temperature (Tg') of the sample. The increased long-term survival of the biological sample, as described herein following syngeneic re-transplantation, suggests that for optimal long-term preservation, the biological sample should be kept in the Tg' rather than at the lower temperature of liquid nitrogen or vapors thereof.

In some embodiments, the present invention uses a device comprising a first container suitable for holding a sample; an actuator configured for adjusting the position of the container through a passage along a cooling axis; a heating element in contact with the container; and a control unit in operable communication with the actuator and with the heating element and configured to provide a predetermined temperature to the sample.

According to a first aspect, there is provided a method for cryopreserving a biological sample, comprising the steps of: (a) contacting a biological sample with a vitrification solution (VS) in a volume per volume (v/v) ratio ranging from 50:1 to 1:1; (b) first subjecting the biological sample of step (a) to a temperature ranging from -210 °C to - 197 °C for a period of 3-10 seconds; and (c) second subjecting the biological sample of step (b) to a temperature being equal to or greater than a transition glass point temperature (Tg) of the VS and ranging from -140 °C to -100 °C for a period of at least 3 minutes; thereby cryopreserving the biological sample.

The method enables a preparation of the biological sample for transplantation to a subject in need thereof.

According to another aspect, there is provided a method for cryopreserving a limb, preparing a limb for transplantation to a subject in need thereof, or both, comprising the steps of: (a) contacting a biological sample comprising the limb with a VS in a volume per volume (v/v) ratio ranging from 50:1 to 1:1; (b) first subjecting the biological sample comprising the limb of step (a) to a temperature ranging from -210 °C to -197 °C for a period of 3-10 seconds; and (c) second subjecting the biological sample comprising the limb of step (b) to a temperature being equal to or greater than a Tg' of said VS and ranging from -140 °C to -100 °C for a period of at least 3 minutes; thereby cryopreserving a limb, preparing a limb for transplantation to a subject in need thereof, or both.

A method of transplanting a biological sample in a subject in need thereof, may comprise the steps: (a) cryopreserving the biological sample according to the method of the invention; and (b) thawing or warming and transplanting the cryopreserved biological sample to the subject.

A device for use with the invention may comprise:
a first container structured for holding a sample; an actuator configured for adjusting a position of the first container through a passage along a cooling axis; a heating element in contact with the first container; and a control unit in operable communication with the actuator and with the heating element, and configured to control a temperature of the sample by commanding: (a) a configuration of the actuator such that a position of the first container is adjusted through the passage along the cooling axis; (b) the heating element to apply a predetermined amount of heat to the first container; or (a) and (b).

In some embodiments, the biological sample comprises a tissue or an organ being vascularized, innervated, or both.

In some embodiments, the biological sample comprises a limb.

In some embodiments, the method further comprises preserving the biological sample after the second subjecting comprising further cooling the biological sample at a rate ranging from -1 °C/min to -10 °C/min to a temperature below the Tg or between -197 °C to -150 °C.

In some embodiments, the biological sample obtained following step (a) is submerged in the VS, covered by the VS, or both.

In some embodiments, contacting is under vacuum conditions.

In some embodiments, contacting is in an elastic bag.

In some embodiments, the biological sample obtained following step (a) is essentially devoid of air.

In some embodiments, the biological sample obtained following step (b) comprises an outer surface in contact with the VS, wherein the outer surface is characterized by having a temperature ranging from -20 °C to 0 °C.

In some embodiments, the first subjecting is freezing at a rate of -330 °C/min to - 500 °C/min.

In some embodiments, the first subjecting is in a slush of a cryogenic liquid or under a cryogenic condition of -220 °C to -150 °C.

In some embodiments, the second subjecting is freezing at a rate of -3 °C/min to - 10 °C/min.

In some embodiments, the second subjecting is in: (a) vapors of a cryogenic liquid; or (b) a cooling condition providing a temperature ranging from -85 °C to -75 °C followed by vapors of a cryogenic liquid.

In some embodiments, the cooling condition providing a temperature ranging from -85 °C to -75 °C comprises a cooling liquid having a temperature ranging from -85 °C to - 75 °C.

In some embodiments, the period of at least 3 minutes of step (c) is at least 30 minutes.

In some embodiments, the method further comprises a step preceding step (a), comprising perfusing the biological sample with the VS.

In some embodiments, the perfusing is at room temperature for a period of up to 5 minutes.

In some embodiments, the VS comprises at least one: permeating cryoprotecting agent, non-permeating cryoprotecting agent, or a combination thereof, and optionally further comprises: a macromolecule, an antioxidant, a medium, or any combination thereof.

In some embodiments, the VS comprises: 15-25% (w/v) ethylene glycol, 15-25% (v/v) dimethyl sulfoxide, 15-25 (v/v) fetal bovine serum, and 0.3-0.7 M trehalose, all of which in Wisconsin static preservation solution.

In some embodiments, the method further comprises a step (d) comprising preserving the cryopreserved biological sample for a period of at least 24 hours.

In some embodiments, the subject is in need of an organ replacement.

In some embodiments, the method further comprises a step of washing and perfusing the cryopreserved biological sample, wherein the step precedes the transplanting of the cryopreserved biological sample to the subject.

In some embodiments, the transplanting is autologous transplanting or allogenically transplanting.

In some embodiments, the axis is parallel to a longitudinal axis of the passage.

In some embodiments, the heating element is positioned on top of the first container and at least partially overlaps thereto.

In some embodiments, the device further comprises at least one temperature sensor.

In some embodiments, the at least one temperature sensor is coupled to the first container such that a temperature of the first container is measurable by the temperature sensor.

In some embodiments, the control unit is in operable communication with the at least one temperature sensor.

In some embodiments, the device further comprises a second container structured for containing a cryogenic liquid, slush thereof, vapors thereof, or any combination thereof.

In some embodiments, the cryogenic liquid comprises liquid nitrogen (LN2).

Unless otherwise defined, all technical and/or scientific terms used herein have the same meaning as commonly understood by one of ordinary skill in the art to which the invention pertains. Although methods and materials similar or equivalent to those described herein can be used in the practice or testing of embodiments of the invention, exemplary methods and/or materials are described below. In case of conflict, the patent specification, including definitions, will control. In addition, the materials, methods, and examples are illustrative only and are not intended to be necessarily limiting.

Further embodiments and the full scope of applicability of the present invention will become apparent from the detailed description given hereinafter. However, it should be understood that the detailed description and specific examples, while indicating preferred embodiments of the invention, are given by way of illustration only, since various changes and modifications within the scope of the invention as defined by the appended claims will become apparent to those skilled in the art from this detailed description.

### BRIEF DESCRIPTION OF THE FIGURES

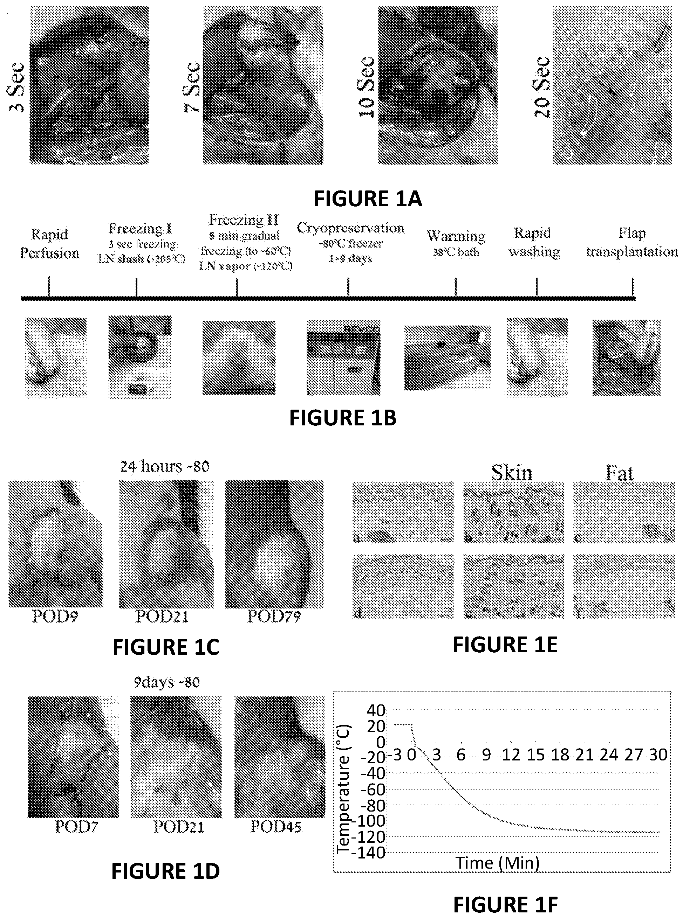

**Figs. 1A-1F** include micrographs and graphs showing long-term survival of a vascularized groin flaps following long-term cryopreservation at -80 °C. (**1A**) Vascularized groin flaps were perfused at room temperature with cryoprotectants (CPAs), dipped into liquid nitrogen (LN) slush for the indicated times, transferred to LN vapor for 2 min, warmed, retransplanted to a syngeneic recipient and photographed. (**1B**) Vascularized groin flaps were cryopreserved according to the scheme and were transplanted in a syngeneic manner after 24 hours (**1C**) or 9 days (**1D**) storage at -80 °C and followed and photographed at the indicated times or removed for histology at post-operation day (POD12). Histological sections of flaps stored at -80 °C for 24 hours (**1Ea-1Ec**) or 9 days (**1Ed-1Ef**) were stained with hematoxylin and eosin (H&E) and photographed. A vascularized groin flaps was perfused with CPAs, dipped in LN slush for 3 seconds and then transferred to LN vapor for 30 minutes and the Intra-flap temperatures were measured (**1F**).

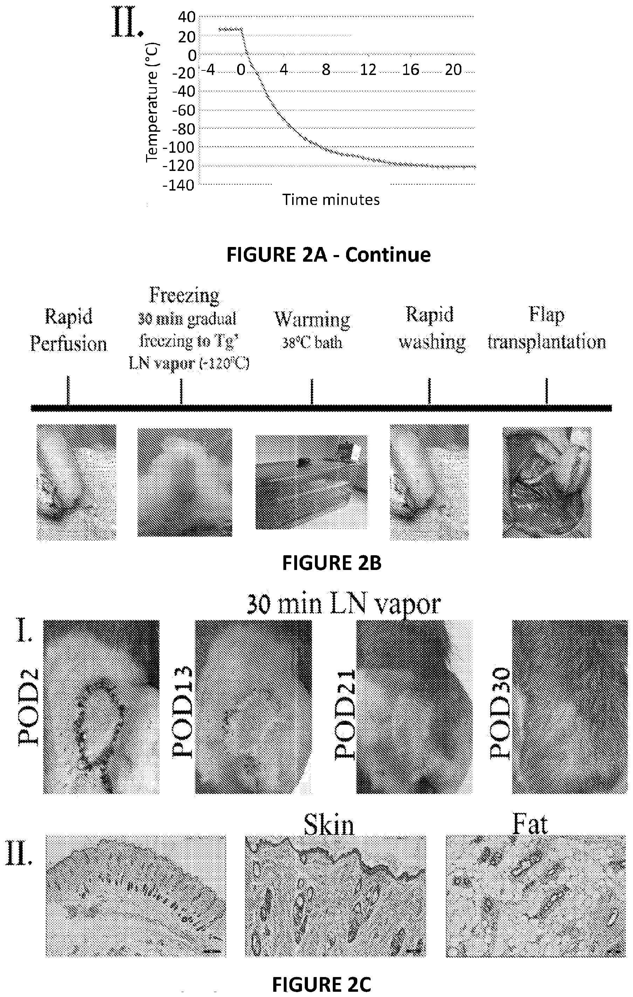

**Figs. 2A-2C** include graphs, an illustration, and micrographs showing long-term survival of a vascularized groin flaps following cryopreservation at the Tg'. (**2AI**) The Tg' of the vitrification solution (VS) was determined by differential scanning calorimetry (DSC) analysis. (**2AII**) A vascularized groin flaps was perfused at room temperature with CPAs and then transferred to LN vapor. Intra-flap temperatures were measured until Tg' was reached. (**2B** and **2CI**) Vascularized groin flaps were perfused at room temperature with CPAs, incubated in LN vapor for 30 min, warmed, retransplanted and photographed at the indicated times. (**2CII**) Vascularized groin flaps cryopreserved and transplanted as described in **2B** were removed for histological analysis at POD12. Slides were stained with H&E and photographed.

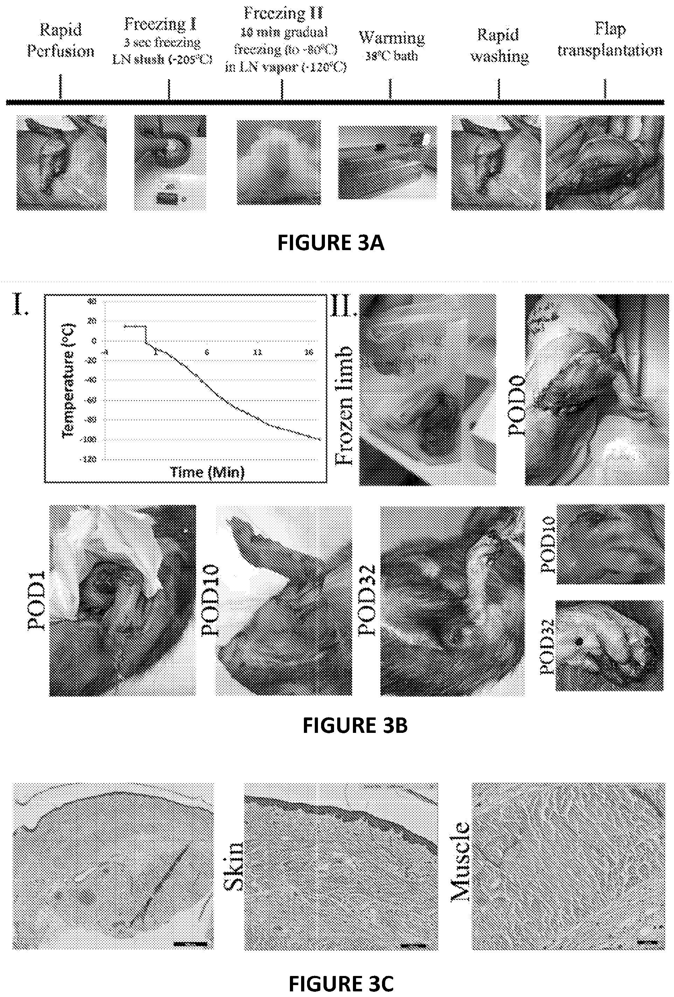

**Figs. 3A-3C** include an illustration, graphs showing long term stability of hind-limb following cryopreservation. (**3A**) A scheme of the two-stage limb cryopreservation protocol. (**3BI**) A limb was perfused at room temperature with cryoprotectants (CPAs), dipped into LN slush for 4 sec and then transferred to LN vapor. Intra-limb temperatures were measured for 17 min. (**3BII**) A limb was perfused at room temperature with CPAs, dipped into LN slush for 4 sec, transferred to LN vapor for 10 min, warmed, retransplanted and photographed at the indicated times. Peripheral limb perfusion was demonstrated at POD10 and POD32 by needle puncture-induced bleeding. At POD32, the limb was removed for histological analysis; sections were stained with H&E (**3C**). Normal skin and muscle structure were demonstrated.

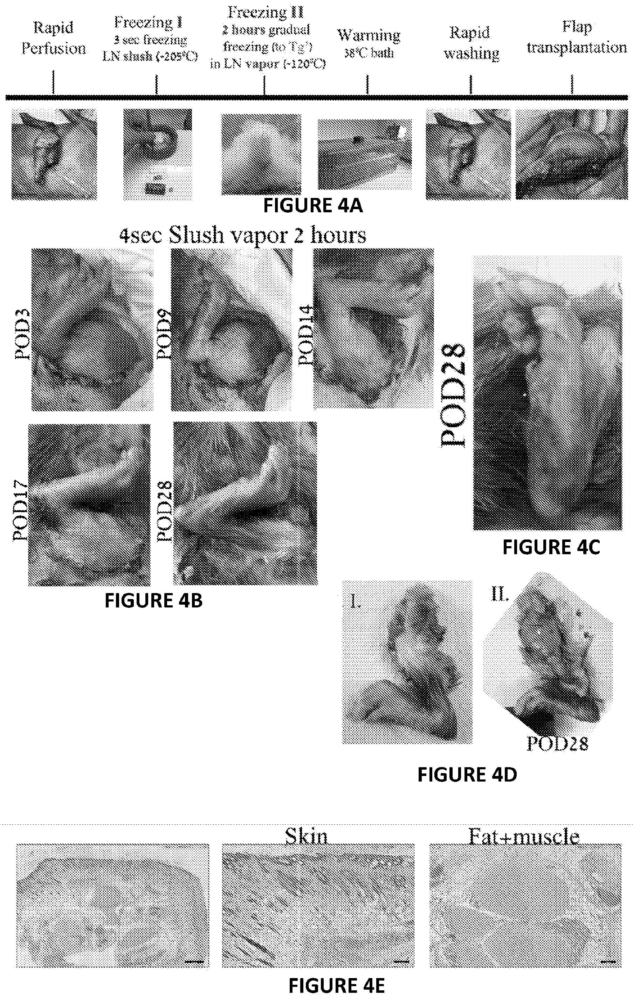

**Figs. 4A-4E** include an illustration and micrographs showing long-term survival of a hind-limb following cryopreservation at Tg'. Limbs were perfused at room temperature with cryoprotectants (CPAs), dipped into LN slush for 4 sec, transferred to LN vapor for 2 hours, warmed, retransplanted (**4A**) and photographed at the indicated times (**4B**). (**4C**) Peripheral limb perfusion was demonstrated at POD28 by needle puncture-induced bleeding. At POD32, the limb was removed for histological analysis and the frontal (**4DI**) and rear (**4DII**) sides of the harvested limb was photographed; sections were stained with H&E. Normal skin, fat and muscle structure were demonstrated (**4E**).

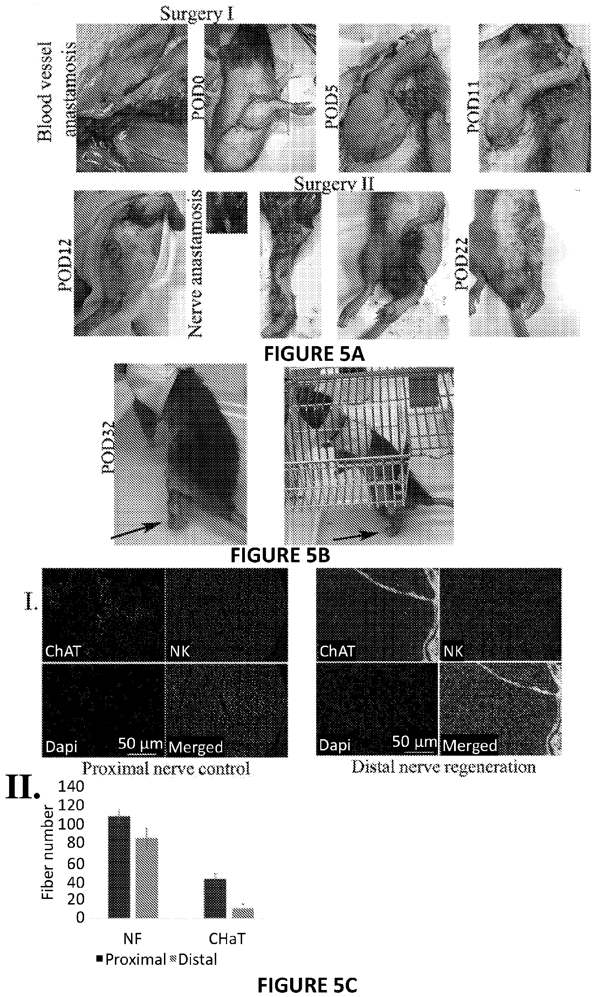

**Figs. 5A-5C** include an illustration and micrographs showing nerve regeneration and functional sensation in a replanted cryopreserved limb. (**5AI**) A limb was cryopreserved using the two-stage cryopreservation protocol as described at **Fig. 3A** and then transplanted as a fifth limb at the waist of a recipient rat. (**5AII**) At POD12, following below the knee amputation of the recipient limb, the transplanted cryopreserved limb was moved from its waist position to a below the knee position, without disconnecting its blood supply from the femoral vessels of the recipient, and sutured. The tibial nerve of the recipient was connected to the cryopreserved limb to allow for nerve regeneration and regained sensation. (**5B**) At 22 days following below the knee transplantation, the rat was able to walk using the cryopreserved limb (**5CI**). At 23 days following below the knee transplantation, the tibial nerve was removed for histological analysis and sections from the proximal and distal side of the nerve anastomosis were stained for neurofilament (NF (total axons)) and choline acetyltransferase (ChAT (motor axons) proteins. DAPI was also applied for nuclear staining. (**5CII**) A graph showing quantitative fiber count conducted using a digital system.

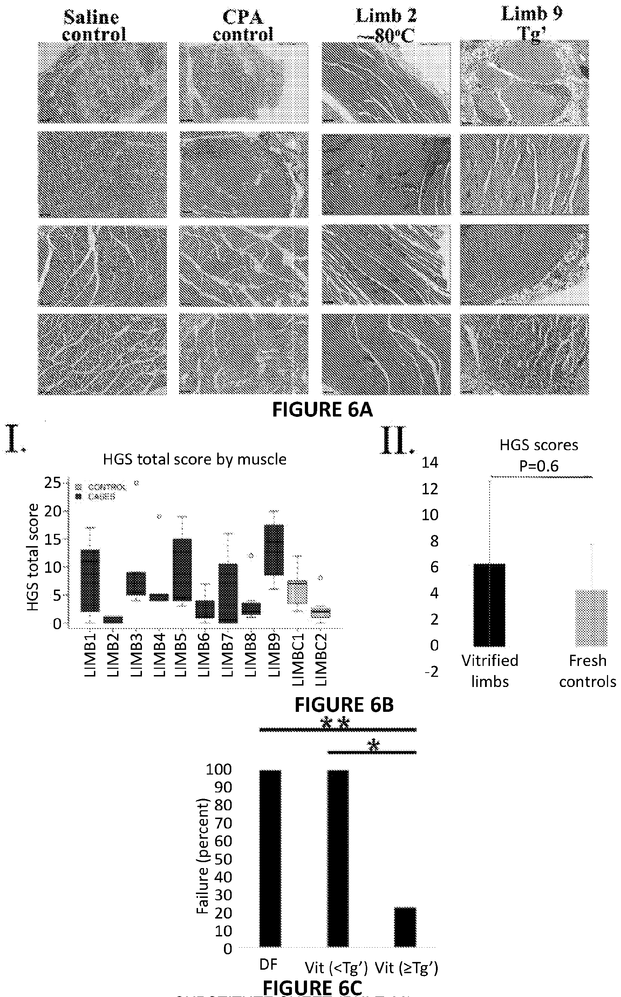

**Figs. 6A-6C** include histological micrographs and graphs showing that transplanted cryopreserved and fresh limbs demonstrate similar muscle integrity. Below-the knee limb transplants were perfused with saline or CPAs, washed and immediately transplanted as fresh controls (saline and CPA control, respectively) and compared to similar transplants that were cooled to ~ -80 °C or Tg, according to the protocols displayed in **Figs. 3A** and **4A****,** respectively. At post-operation day (POD)≥12, the limb was removed and fixed, and sections from different parts of the limb were prepared, stained with hematoxylin and eosin, and documented. Muscle quality was scored and compared by a blinded pathologist. (**6A**) Histological micrographs showing selected presentation of muscle sections of the different controls and experiment groups. (**6BI**) A graph showing comparative statistical analysis of the muscle scores of control the experimental limbs. (**6BII**) A vertical bar graph showing that no significant differences were observed between muscle quality of the fresh controls and experimental limbs (p=0.6). (**6C**) A vertical bar graph showing a comparison of long-term limb survival between groups of limbs frozen using directional freezing (DF), limbs vitrified to temperatures lower than Tg and limbs vitrified to temperatures ≥Tg.
**Fig. 7** includes a general view simplified illustration of a first container of the device, for use with the present invention.
**Fig. 8** includes a rear-view simplified illustration of a control unit of the device, for use with the present invention.
**Fig. 9** includes a general view simplified illustration of the device, for use with the present invention.
**Fig. 10** includes an all-connection view simplified illustration of a first container of the device, for use with the present invention.
**Fig. 11** includes an upper close up view simplified illustration of a first container of the device, for use with the present invention.
**Fig. 12** includes a general view simplified illustration of a control unit panel of the device, for use with the present invention.
**Fig. 13** includes a general view simplified illustration of a second container control of the device, for use with the present invention.
**Fig. 14** includes a general view simplified illustration of an actuator of the device, for use with the present invention.

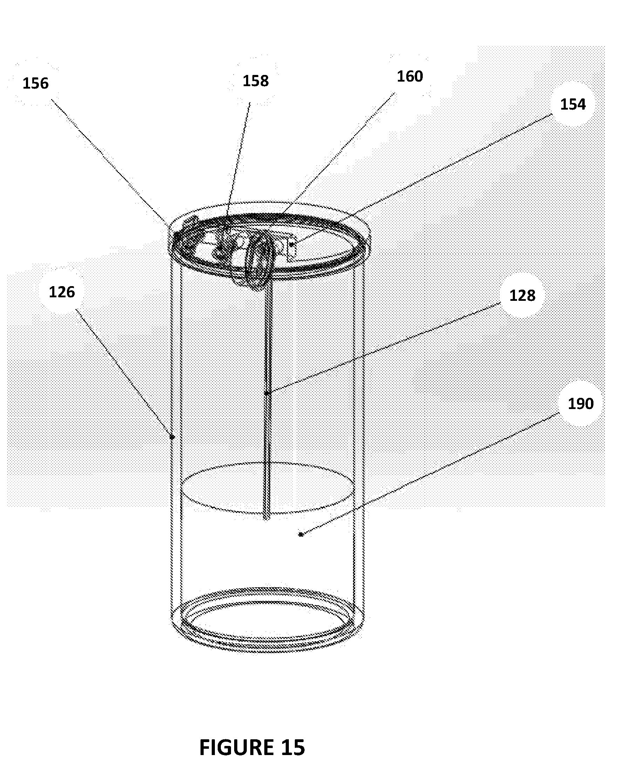

**Fig. 15** includes a general view simplified illustration of a second container of the device, for use with the present invention.

### DETAILED DESCRIPTION

The present invention is directed to a method of vitrification, providing long-term survival of cryopreserved a vascularized and/or an innervated tissue.

### Method

According to some embodiments, there is provided a method for cryopreserving a biological sample.

According to some embodiments, there is provided a method for preparing a biological sample for transplantation, e.g., to a subject in need thereof.

According to some embodiments, there is provided a method for cryopreserving a limb, for preparing a limb for transplantation to a subject in need thereof, or both.

The method comprises the steps of: (a) contacting a biological sample with a vitrification solution (VS) in a volume per volume (v/v) ratio ranging from 50:1 to 1:1; (b) first subjecting the biological sample to a temperature ranging from -210 °C to -197 °C for a period of 3-10 seconds; and (b) second subjecting the biological sample of step (a) to a temperature being equal to or greater than a transition glass temperature (Tg) of the VS and ranging from -140 °C to -100 °C for a period of at least 3 minutes.

In some embodiments, the method further comprises preserving the biological sample after the second subjecting, comprising further cooling the sample at a rate ranging from -1 °C/min to -10 °C/min to a temperature below the transition glass point temperature of the VS, or between -197 °C to -150 °C.

As used herein the terms "preserving" and "storing" are interchangeable.

In some embodiments, the cryopreserved biological sample is stored at a temperature being the Tg of the VS. In some embodiments, the cryopreserved biological sample is stored at a temperature lower than the Tg of the VS. In some embodiments, the cryopreserved biological sample is stored at a temperature greater than the Tg of the VS.

In some embodiments, the biological sample comprises a tissue or an organ.

In some embodiments, the tissue or organ comprises a vasculature system. In some embodiments, the tissue or organ comprises at least one nerve, neuron, axon, dendrite, ganglion, or any combination thereof. In some embodiments, the tissue or organ is vascularized, innervated, or both.

In some embodiments, the tissue or organ is selected from: a limb, a kidney, a heart, a liver, a lung, a pancreas, an intestine, skin, or tissue fragments derived therefrom.

In some embodiments, the biological sample comprises a limb.

In some embodiments, a limb comprises an upper limb, a lower limb, or a plurality of limbs comprising upper limbs, lower limbs, or a combination thereof.

As used herein, the terms "subjecting", "cooling", "chilling", and "freezing", are interchangeable.

In some embodiments, the biological sample and VS are in a (v/v) ratio ranging from 50:1 to 1:1, 100:1 to 1:1, 250:1 to 1:1, 40:1 to 10:1, 25:1 to 5:1, or 45:1 to 6:1. Each possibility represents a separate embodiment of the invention.

In some embodiments, the biological sample obtained following step (a) is submerged in the VS, covered by the VS, or both.

In some embodiments, the biological sample obtained following step (a) is at least partially submerged in the VS, at least partially covered by the VS, or both.

In some embodiments, contacting is under vacuum conditions.

In some embodiments, the method comprises placing the biological sample in an elastic bag. In some embodiments, the method comprises a step of providing a biological sample in an elastic bag.

In some embodiments, contacting is in an elastic bag. In some embodiments, the elastic bag comprises a plastic bag. In some embodiments, the elastic bag comprises a sealable elastic bag. In some embodiments, the vacuum is applied wherein the biological sample is in the elastic bag. In some embodiments, the elastic bag is sealed after the application of vacuum on the biological sample in contact with a VS.

In some embodiments, the biological sample is contacted with a VS in an elastic bag at a (v/v) ratio ranging from 50:1 to 1:1, 100:1 to 1:1, 250:1 to 1:1, 40:1 to 10:1, 25:1 to 5:1, or 45:1 to 6:1. Each possibility represents a separate embodiment of the invention.

In some embodiments, the application of vacuum is halted, stopped, discontinued, or any combination and equivalent thereof, after the elastic bag comprising the biological sample and VS is devoid of air or essentially devoid of air.

As used herein, the term "vacuum" encompasses to the application of any pressure that is lower than atmospheric pressure.

In some embodiments, biological sample obtained following step (a) is devoid of air. In some embodiments, biological sample obtained following step (a) is essentially devoid of air.

In some embodiments, the biological sample obtained following step (b), e.g., resulting from the application of vacuum, comprises an outer surface in contact with the VS. In some embodiments, the outer surface of the biological sample is characterized by having a temperature ranging from: 0 °C to -20 °C, -1 °C to -15 °C, -3 °C to -19 °C, or 0 °C to -17 °C. Each possibility represents a separate embodiment of the invention.

In some embodiments, the first subjecting is under any condition suitable for reducing the temperature of the biological sample to subzero Celsius degrees within 7 minutes at most, 6 minutes at most, 5 minutes at most, 4 minutes at most, 3 minutes at most, 2 minutes at most, or 1 minute at most, or any value and range therebetween. Each possibility represents a separate embodiment of the invention.

In some embodiments, a condition suitable for reducing the temperature of the biological sample to subzero Celsius degrees comprises any cooling rate equal to or greater than -5 °C/min.

In some embodiments, the first subjecting comprises freezing at a rate of -10 °C/min to -20 °C/min, -5 °C/min to -40 °C/min, -30 °C/min to -70 °C/min, -60 °C/min to - 120 °C/min, -130 °C/min to -270 °C/min, -230 °C/min to -350 °C/min, -330 °C/min to - 370 °C/min, -310 °C/min to -390 °C/min, -300 °C/min to -385 °C/min, -295 °C/min to - 365 °C/min, -280 °C/min to -395 °C/min, or -315 °C/min to -375 °C/min. Each possibility represents a separate embodiment of the invention.

In some embodiments, the first subjecting is in a slush of a cryogenic liquid. In some embodiments, the first subjecting is under a cryogenic condition of -220 °C to -190 °C. In some embodiments, the first subjecting is in a vapor of a cryogenic liquid. In some embodiments, the first subjecting is in a cryogenic liquid, or under a cryogenic condition of -150 °C to -90 °C.

In some embodiments, the second subjecting is freezing at a rate of -6 °C/min to - 10 °C/min, -3 °C/min to -15 °C/min, -2 °C/min to -13 °C/min, -4 °C/min to -11 °C/min, -5 °C/min to -17 °C/min, -6 °C/min to -12 °C/min, -6 °C/min to -8 °C/min. Each possibility represents a separate embodiment of the invention.

In some embodiments, the second subjecting is in: (a) vapors of a cryogenic liquid; or (b) a cooling liquid having a temperature ranging from -120 °C to -40 °C followed by vapors of a cryogenic liquid. In some embodiments, the second subjecting is in: (a) vapors of a cryogenic liquid; or (b) a cooling condition providing a temperature ranging from -85 °C to -75 °C followed by vapors of a cryogenic liquid.

In some embodiments, a cooling condition providing a temperature ranging from -85 °C to -75 °C comprises a cooling liquid having a temperature ranging from -85 °C to - 75 °C.

In some embodiments, a period of at least 3 minutes comprises: at least 4 minutes, at least 5 minutes, at least 7 minutes, at least 10 minutes, at least 15 minutes, at least 20 minutes, at least 30 minutes, at least 45 minutes, at least 60 minutes, at least 1 hour, at least 2 hours, at least 4 hours, at least 8 hours, at least 12 hours, at least 18 hours, at least 24 hours, at least 2 days, at least 7 days, at least 14 days, at least 1 month, or at least 3 months, or any value and range therebetween. Each possibility represents a separate embodiment of the invention. In some embodiments, a period of at least 3 minutes comprises: 3-10 minutes, 5-25 minutes, 5-40 minutes, 10-60 minutes, 15-90 minutes, 1-3 hours, 2-12 hours, 4-18 hours, 8-24 hours, 12-36 hours, 1-3 days, 2-7 days, 5-14 days, 2-5 weeks, or 1-3 months. Each possibility represents a separate embodiment of the invention.

In some embodiments, contacting comprises perfusing of the biological sample.

Methods for perfusing a biological sample, e.g., a tissue comprising blood vessels, are common and would be apparent to one of ordinary skill in the art.

In some embodiments, perfusing comprises perfusing at least one blood vessel of the biological sample. In some embodiments, perfusing comprises perfusing at least one artery of the biological sample. In some embodiments, perfusing comprises contacting the at least one blood vessel of the biological sample with: (a) a solution comprising saline, heparin, or a combination thereof; (b) an equilibrium solution; (c) a vitrification solution; or any combination of (a) to (c).

In some embodiments, the method further comprises a step comprising perfusing the biological sample with a cryoprotecting agent. In some embodiments, the method further comprises a step comprising perfusing the biological sample with a solution comprising saline, heparin, or a combination thereof. In some embodiments, the method further comprises a step comprising perfusing the biological sample with an equilibrium solution. In some embodiments, the method further comprises a step comprising perfusing the biological sample with VS. In some embodiments, the step comprising perfusing the biological sample precedes the first subjecting of the biological sample to a temperature ranging from -210 °C to -197 °C for a period of 3-10 seconds (e.g., step (a)).

In some embodiments, the term "equilibrium solution" encompasses any solution suitable for preparing or enhancing the cryogenic endurance or stability of the biological sample. In some embodiments, the equilibrium solution is provided to the biological sample after the biological sample is perfused with a solution comprising saline, heparin, or a combination thereof. In some embodiments, the equilibrium solution is provided to the biological sample before the biological sample is perfused with a VS. In some embodiments, the equilibrium solution enhances or increases the cryoprotecting activity or effect of the VS.

As used herein, "cryogenic endurance" or "cryogenic stability" refer to the capability of tissue or an organ to withstand cryopreservation without or with minimal tissue damage, e.g., freezing injury, bleeding, etc., thereby allowing subsequent manipulation or usage of the cryopreserved tissue or organ, e.g., warming/thawing and/or transplantation thereof.

In one embodiment, the equilibrium solution comprises: 5-10% (v/v) Ethylene Glycol (EG); 2.5-10% (v/v) DMSO; and 5-25% (v/v) fetal calf serum (FCS), all in Wisconsin static preservation solution.

As used herein, the terms "cryoprotecting agent" and "cryoprotectant" are interchangeable and encompass any compound that can be used to protect a biological sample, e.g., a cell, a tissue, an organ, or portions thereof, or any combination thereof, from ice formation damages, e.g., formation of ice crystals or any other freezing related injury.

In some embodiments, the perfusing is for a period of at least 10 seconds, at least 20 seconds, at least 30 seconds, at least 40 seconds, at least 50 seconds, at least 60 seconds, at least 2 minutes, at least 3 minutes, at least 4 minutes, or up to 5 minutes, or any value and range therebetween. Each possibility represents a separate embodiment of the invention. In some embodiments, perfusing is for a period of 5 to 60 seconds, 1 to 3 minutes, 1 to 4 minutes, 1 to 5 minutes, 2 to 3 minutes, 2 to 4 minutes, 2 to 5 minutes, 3 to 4 minutes, 3 to 5 minutes, or 4 to 5 minutes. Each possibility represents a separate embodiment of the invention.

In some embodiments, the contacting, perfusing, or both, is performed in room temperature. In some embodiments, the contacting, perfusing, or both, is performed in ambient temperature. In some embodiments, the contacting, perfusing, or both, is performed in a temperature ranging from 15 °C to 28 °C.

The supplementation of cryoprotectants to a biological sample and/or tissue perfusion is common and would be apparent to one of ordinary skill in the art. Non-limiting examples of cryoprotecting agents include, but are not limited to DMSO, glycerol, ethylene glycol, propylene glycol, sucrose, trehalose, 2-Methyl-2,4-pentanediol (MPD), and/or others.

In some embodiments, the VS comprises a permeating cryoprotecting agent, a non-permeating cryoprotecting agent, or a combination thereof. In some embodiments, the VS further comprises: a macromolecule, an antioxidant, a medium, or any combination thereof. In some embodiments, the VS comprises a permeating cryoprotecting agent, a non-permeating cryoprotecting agent, or a combination thereof and optionally further comprises: a macromolecule, an antioxidant, a medium, or any combination thereof. In some embodiments, the VS comprises a permeating cryoprotecting agent, a non-permeating cryoprotecting agent, a macromolecule, an antioxidant, a medium, or a combination thereof.

In some embodiments, a permeating cryoprotecting agent is selected from: DMSO, ethylene glycol, propylene glycol (PG), glycerol (GLY), or any combination thereof.

In some embodiments, a non-permeating cryoprotecting agent comprises a disaccharide, an oligosaccharide, a polysaccharide, or any combination thereof. In some embodiments, a non-permeating cryoprotecting agent is selected from: sucrose, trehalose, dextran, or any combination thereof.

As used herein, the term "macromolecule" encompasses fetal calf serum, human serum albumin, Ficoll, any combination thereof, or any equivalent thereof.

In some embodiments, an antioxidant comprises Epigallocatechin gallate (EGCG), astaxanthin, or a combination thereof.

In some embodiments, a medium comprises any growth medium suitable for cell and/or organ culture. In some embodiments, a medium comprises PBS, HDMI, or a combination thereof.

In some embodiments, the VS comprises: 15-25% (w/v) ethylene glycol, 15-25% (v/v) dimethyl sulfoxide, 15-25 (v/v) fetal bovine serum, and 0.3-0.7 M trehalose, all of which in Wisconsin static preservation solution.

In some embodiments, the method further comprises a step comprising preserving the cryopreserved sample for a period of at least: 1 day, 2 days, 3 days, 4 days, 5 days, 6 days, 7 days, 10 days, 14 days, 1 months, or 3 months, or any value and range therebetween. Each possibility represents a separate embodiment of the invention. In some embodiments, the method further comprises a step comprising preserving the cryopreserved sample for a period of 1 to 3 days, 2 to 5 days, 1 to 7 days, 3 to 12 days, 6 to 14 days, 1 to 3 weeks, 2 to 5 weeks, 3 to 6 weeks, or 1 to 4 months. 1 to 100 years. Each possibility represents a separate embodiment of the invention.

In some embodiments, the duration of preservation comprises any time period as long as survival of the tissue post re-transplantation is maintained for a period of 7-28 days. In some embodiments, the duration of preservation comprises any time period as long as survival of the tissue post re-transplantation is maintained for a period of at least: 7 days, 14 days, 21 days, 28 days, or any value and range therebetween. Each possibility represents a separate embodiment of the invention.

In some embodiments, the preserving is in the glass-transition temperature (Tg) ±1 °C, ±2 °C, ±3 °C, ±4 °C, ±5 °C, ±6 °C, ±7 °C, ±8 °C, ±9 °C, or ±10 °C, or any value and range therebetween, of the cryopreserved sample Each possibility represents a separate embodiment of the invention.

In some embodiments, the Tg comprises or consists of the Tg of the VS.

As used herein, the terms "Tg" and "Tg prime (Tg')" are interchangeable.

In some embodiments, the biological sample comprises a tissue or an organ having a volume of at least: 1 cm³, 15 cm³, 50 cm³, 100 cm³, 150 cm³, 200 cm³, 300 cm³, 500 cm³, 1,000 cm³, 2,000 cm³, 3,000 cm³, 5,000 cm³, 7,000 cm³, 8,500 cm³, 10,000 cm³, or any value and range therebetween. Each possibility represents a separate embodiment of the invention. In some embodiments, the biological sample comprises a tissue or an organ having a volume of 3-50 cm³, 30-250 cm³, 25-500 cm³, 55-650 cm³, 200-1,500 cm³, 300-5,000 cm³, 450-6,500 cm³, 300-7,500 cm³, 1,000-9,500 cm³, 2,000-8,500 cm³, 3,000-10,000 cm³, or 1,000-12,000 cm³. Each possibility represents a separate embodiment of the invention.

In some embodiments, there is provided a method for transplanting a biological sample in a subject in need thereof, comprising the steps: (a) cryopreserving the biological sample according to the herein disclosed method; and (b) thawing and/or warming and transplanting the cryopreserved sample to the subject.

The terms "thawing" and "warming" are used herein interchangeably.

A method for transplanting a biological sample in a subject in need thereof, may comprise the steps: (a) cryopreserving the biological sample according to the herein disclosed method; and (b) transplanting the cryopreserved sample to the subject.

In some embodiments, the method further comprises a step of thawing and/or warming the cryopreserved sample before transplanting the cryopreserved sample to the subject.

In some embodiments, a subject is a mammal subject, such as, but not limited to a human subject.

In some embodiments, the subject is need of an organ replacement.

In some embodiments, organ replacement is due organ damage or a disease. In some embodiments, organ damage comprises injury -induced or -related organ damage.

In some embodiments, injury comprises trauma.

In some embodiments, the subject is or has been afflicted with trauma.

In some embodiments, trauma comprises amputation.

In some embodiments, the method further comprises a step of washing out, eliminating, expelling, discarding, or any combination thereof, the cryoprotecting agent prior after the thawing of the cryopreserved sample. In some embodiments, the method further comprises a step of washing out, eliminating, expelling, discarding, or any combination thereof, the cryoprotecting agent prior before the transplanting of the cryopreserved sample.

In some embodiments, the method further comprises a step of perfusing the cryopreserved biological sample. In some embodiments, the method further comprises a step of perfusing the cryopreserved biological sample before the transplanting of the cryopreserved biological sample.

In some embodiments, the washing and/or perfusing comprises the use of a solution comprising sucrose. In some embodiments, the washing and/or perfusing comprises the use of any solution known to one of skill in the art that is suitable for the current procedure as described herein. In some embodiments, the washing and/or perfusing comprises the use of a solution comprising sucrose. In some embodiments, the solution comprises sucrose in a concentration of: at least 100 mM, at least 125 mM, at least 250 mM, at least 500 mM, or at least 1,000 mM (1M), or any value and range therebetween. Each possibility represents a separate embodiment of the invention. In some embodiments, the solution comprises sucrose in a concentration ranging from 100 mM to 500 mM, 250 mM to 750 mM, or 100 mM to 1,000 mM. Each possibility represents a separate embodiment of the invention.

In some embodiments, transplanting is autologous transplantation.

In some embodiments, transplanting is allogenically transplanting.

### Device

There is provided a device comprising: a first container **102** structured for holding a sample **104;** an actuator **300** configured for adjusting a vertical position of the first container **102** through a passage along a cooling axis; a heating element **152** in contact with the first container **102;** and a control unit **200** in operable communication with the actuator **300** and with the heating element **152,** and configured to control a temperature of the sample **104.**

In some embodiments, the cooling axis is parallel to a longitudinal axis of the passage.

In some embodiments, the device further comprises at least one temperature sensor. As used herein, the terms "temperature sensor" and "thermocouple" are interchangeable.

In some embodiments, the at least one temperature sensor is coupled to the first container **102** such that a temperature of the first container **102** is measurable by the temperature sensor.

In some embodiments, the control unit **200** is in operable communication with the at least one temperature sensor.

In some embodiments, the control unit **200** is configured to controlling or is in communication with the heating element such that a biological sample is cryopreserved according to the herein disclosed method. In some embodiments, the control unit activates or control the heating element such that the biological sample of step (a) of the herein disclosed method is subjected to a temperature ranging from -210 °C to -197 °C for a period of 3-10 seconds.

In some embodiments, the control unit **200** activates or control the heating element such that the biological sample of step (b) of the herein disclosed method is subjected to a temperature ranging from -140 °C to -100 °C for a period of at least 3 minutes.

In some embodiments, the device further comprises a second container **126** structured for containing a cryogenic liquid **190,** slush thereof, vapors thereof, or any combination thereof.

In some embodiments, the cryogenic liquid comprises liquid nitrogen (LN2). In some embodiments, the cryogenic liquid comprises LN2 slush. In some embodiments, the cryogenic liquid comprises LN2 vapors.

Reference is made to **Figure 5****,** which is a general view simplified illustration of some of the components of the device, according to some embodiments of the invention, comprising: first container **102** structured for holding a sample **104,** a home position limit switch **106;** a control unit **200;** a tray **204;** a first container cable **110;** a limit switch stopper **112;** a first container support cable (wide side) **114;** a first container support cable **116;** first container cover tighten screw (wide side) **118;** a heating element spring cable **120;** thermocouple spring cable **122;** first container cover tighten screw (length side) **124;** a second container structured for containing a cryogenic liquid **126;** and thermocouple **128.**

Reference is made to **Figure 6****,** which is a rear-view simplified illustration of a control unit **200** of the device, according to some embodiments of the present invention, comprising: a vacuum pump power supply socket **402;** and a main supply socket and fuse switch **202.**

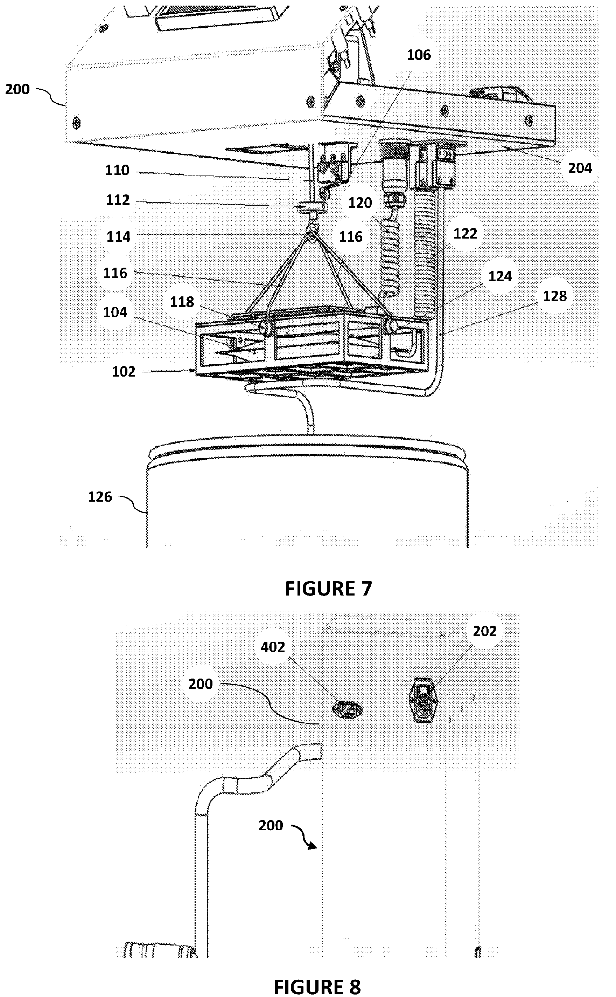

Reference is made to **Figure 7****,** which is a general view simplified illustration of the device, according to some embodiments of the present invention, comprising: control unit **200;** a first container **102;** a housing of the device **500;** a vacuum pipe **404;** a vacuum pump **406;** cryogenic liquid/slush **190;** a second container structured for containing a cryogenic liquid **126;** and thermocouple **128.**

Reference is made to **Figure 8****,** which is a general view simplified illustration of a first container of the device, according to some embodiments of the present invention, comprising: a thermocouple socket **132** of thermocouple **128;** a thermocouple socket **134;** a thermocouple plug **130** of thermocouple **128;** a thermocouple spring cable **134;** a thermocouple cable **136** of thermocouple **128;** a thermocouple plug **138;** a heating element socket **140;** a limit switch holder **142;** a heating element spring cable **120;** a first container support cable (wide side) **114;** a first container cover tighten screw (length side) **124;** a first container hanging hook **144;** a limit switch **146;** a first container hanging metal ring **148;** a first container support cable **114;** a heating element cover plate **150;** a heating element **152;** a sample **104;** and first container cover tighten screw (wide side) **118.**

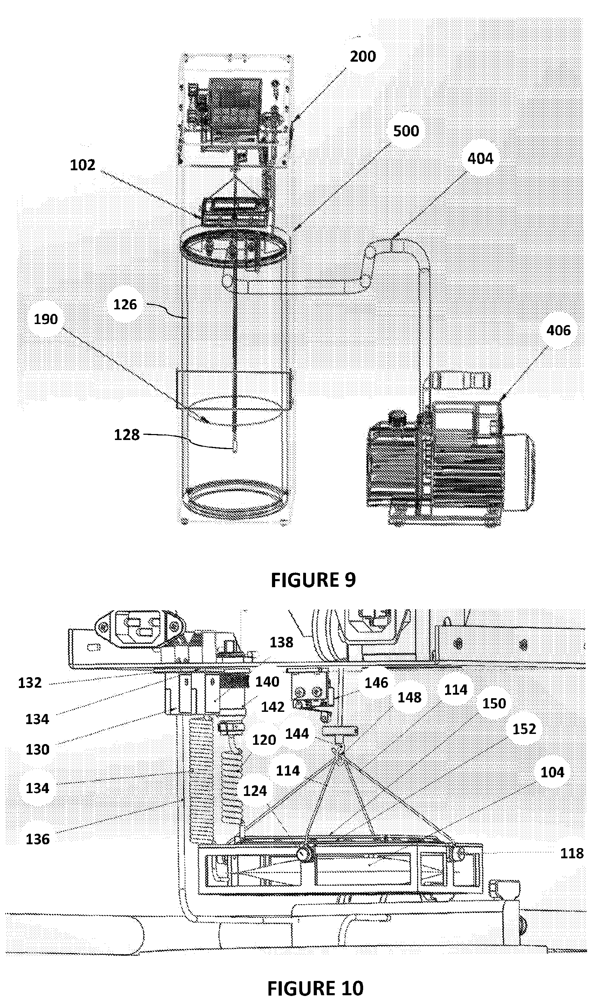

Reference is made to **Figure 9****,** which is an upper close up view simplified illustration of a top portion of the device, according to some embodiments of the present invention, comprising: a limit switch holder **142;** a limit switch **144;** a thermocouple plug **130** of thermocouple **128;** a heating element socket **140;** a heating element plug **152;** control unit **200** tray **204;** a first container cable **110;** a limit switch stopper **112;** a first container hanging hook **144;** and a first container hanging metal ring **148.**

Reference is made to **Figure 10****,** which is general view simplified illustration of a control unit **200** panel of the device, according to some embodiments of the present invention, comprising: a control unit front panel **206;** a vacuum pump stop/start switch **208;** a start process switch **210;** a Programmable Logic Controller (PLC) liquid crystal display (LCD) **212;** an alarm red indicator led **214;** a vacuum pump on green indicator led **216;** and a cooling process in progress green indicator led **218.**

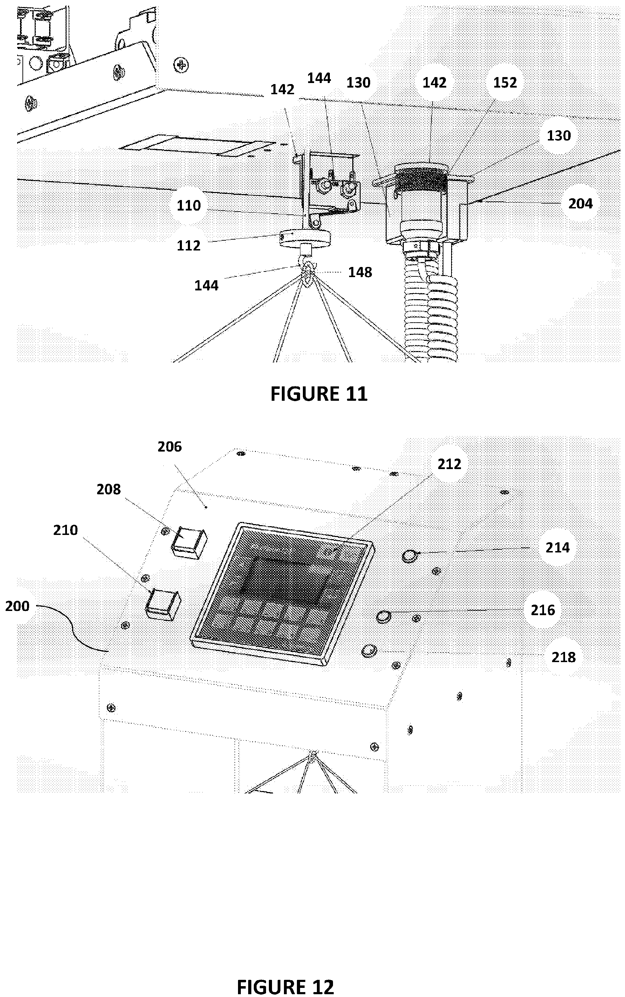

Reference is made to **Figure 11****,** which is general view simplified illustration of a second container control of the device, according to some embodiments of the present invention, comprising: a vacuum valve manifold **154;** a vacuum relies valve **156;** a vacuum supply valve **158;** a vacuum manometer **160;** a second container cover O-ring **162;** a second container **126;** a thermocupel passtrue **164;** a second container cover **166;** and a thermocouple **128.**

Reference is made to **Figure 12****,** which is general view simplified illustration of an actuator **300** of the device, according to some embodiments of the present invention comprising: a thermocouple socket **130** of thermocouple **128;** a heating element plug socket **140;** a thermocouple socket **134;** a vacuum pump power supply socket **402;** a cable collection wheel **302;** a first container cable **110;** a step motor holder panel **304;** a step motor with an integral driver **306;** and a main supply socket and fuse switch **202.**

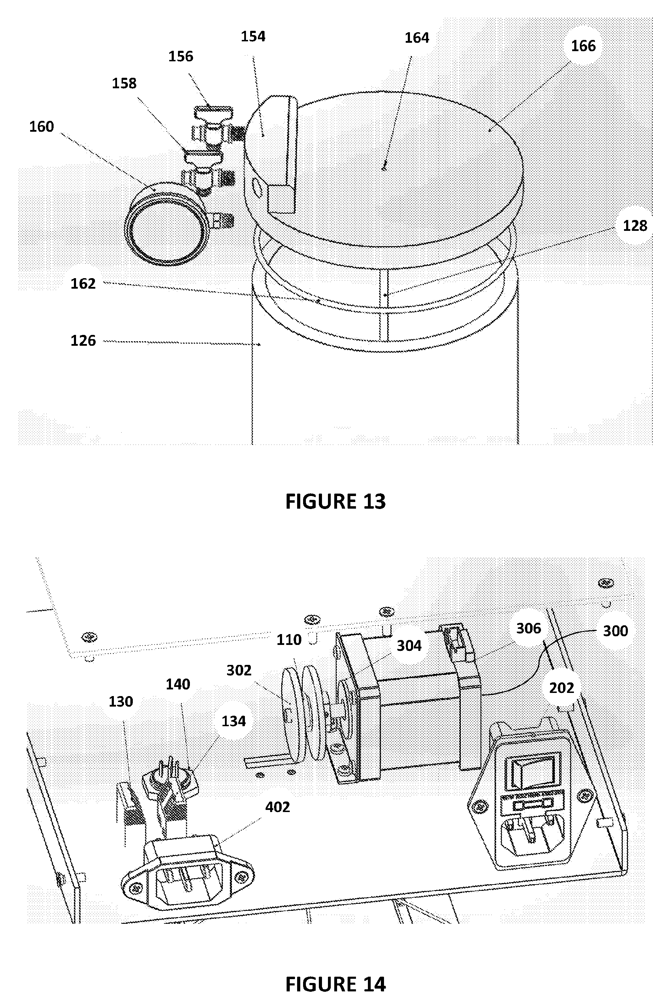

Reference is made to **Figure 13****,** which is general view simplified illustration of a second container of the device, according to some embodiments of the present invention, comprising: a vacuum valve manifold **154;** a vacuum relies valve **156;** a vacuum supply valve **158;** a vacuum manometer **160;** a thermocouple **128;** a cryogenic liquid/slush **190;** and a second container **126.**

In some embodiments, the second container has a longitudinal axis. In some embodiments, the longitudinal axis is parallel to a cooling axis. In some embodiments, an actuator **300** is configured for adjusting a position of the first container **102** through a passage along a cooling axis.

In some embodiments, a heating element **152** is in contact with the first container **102.** In some embodiments, a heating element **152** is located on top of the first container **102** and at least partially overlaps thereto. In some embodiments, a heating element **152** is configured to heat the first container, thereby increasing the temperature of the sample.

In some embodiments, a control unit **200** is in operable communication with the actuator **300** and with the heating element **152.** In some embodiments, a control unit **200** is configured to control a temperature of the sample **104** by commanding: (a) a configuration of the actuator **300** such that the first container **102** is moved through the passage along the cooling axis; (b) the heating element **152** to apply a predetermined amount of heat to the first container **102;** or (a) and (b). In some embodiments, the actuator **300** is configured to adjust a position of the first container, along the cooling axis. In some embodiments, the actuator **300** is adjusting the position of the first container, to the lower portion of the second container, thereby reducing the temperature of the sample. In some embodiments, the actuator **300** is adjusting the position of the first container, to the top portion of the second container, thereby increasing the temperature of the sample. In some embodiments, the actuator **300** is adjusting the position of the first container such that the first container is positioned not more than: 1 cm, 2 cm, 5 cm, 7 cm, 10 cm, 15 cm, 20 cm, or 25 cm over the top portion of the second container, or any value and range therebetween. Each possibility represents a separate embodiment of the invention.

In some embodiments, the actuator **300** is adjusting the position of the first container such that the first container is positioned not more than: 1 cm, 2 cm, 5 cm, 7 cm, 10 cm, 15 cm, 20 cm, or 25 cm over the surface of a cryogenic liquid stored or contained within the second container, or any value and range therebetween. Each possibility represents a separate embodiment of the invention.

In some embodiments, a temperature sensor can be a thermocouple. In some embodiments, a temperature sensor can be wireless temperature sensor. In some embodiments, a temperature sensor can be an infrared sensor. In some embodiments, the device comprises at least one temperature sensor at the first container, configured to measure the temperature of the sample. In some embodiments, the device comprises at least one temperature sensor at the second container, configured to measure the temperature of the LN2 slush. In some embodiments, a temperature sensor is in operable communication with the control unit.

In some embodiments, the device further comprises a thermally non-conductive portion, e.g., an insulation portion. In some embodiments, a non-conductive portion comprises a thermally non-conductive material, e.g., an insulation material.

Any non-thermally conductive material known in the art can be used. In some embodiments, the thermally non-conductive material is selected from: butane, hydrazine, chloroform, hydrazine, 1,1,2-trichloro-trifluoroethane, 1,2-dichlorotetra Fluoroethane, tetrafluoroethane, argon, carbon dioxide, diethyl ether, isobutane, pentane, perfluorocyclobutane, propane, tetrafluoromethane, CFC-11, HCFC-141b, methanol, B Alcohol, glycerin, ether, acetone, ethylene glycol, non-thermally conductive polyoxo-containing fluid containing glass (such as glass fiber or glass beads), propylene glycol, acrylic glass, asphalt, cement, clay, concrete, ceramic filled with Corian, Cork, cotton wool insulation, diatomaceous earth, epoxy resin, glass fiber, foam glass, glass beads or beads, glass wool, gypsum, magnesite, magnesium oxide insulation, mineral insulation, nylon, pearlite , foam plastic insulation, expanded polystyrene, polyurethane, porcelain, PTFE, PVC, Pyrex glass, sand, vermiculite aerogel, styrene foam, urethane Foam, vermiculite, vinyl ester and combinations thereof.

In some embodiments, the thermally non-conductive portion comprises a plurality of sequential layers. In some embodiments, the non-conductive portion comprises a plurality of concentric layers.

As used herein, the term "plurality" refers to any integer of at least 2, at least 3, at least 4, at least 5, at least 7, or at least 10, or any value and range therebetween. Each possibility represents a separate embodiment of the invention. In some embodiments, plurality comprises 2-5, 2-7, 2-10, 3-8, or 3-10. Each possibility represents a separate embodiment of the invention.

In some embodiments, each layer of a plurality of sequential layers is in contact with at least another layer. In some embodiments, the layers of a plurality of sequential layers are not in contact with one another. In some embodiments, a void between the layers of a plurality of sequential layers that are not in contact with one another, is filled with air or an inert gas. In some embodiments, a void between the layers of a plurality of sequential layers that are not in contact with one another, is devoid of any liquid or gas. In some embodiments, a void between the layers of a plurality of sequential layers that are not in contact with one another, is devoid of air.

### General

As used herein the term "about" refers to ± 10 %.

The terms "comprises", "comprising", "includes", "including", "having" and their conjugates mean "including but not limited to".

The term "consisting of means "including and limited to".

The term "consisting essentially of" means that the composition, method or structure may include additional ingredients, steps and/or parts, but only if the additional ingredients, steps and/or parts do not materially alter the basic and novel characteristics of the claimed composition, method or structure.

The word "exemplary" is used herein to mean "serving as an example, instance or illustration". Any embodiment described as "exemplary" is not necessarily to be construed as preferred or advantageous over other embodiments and/or to exclude the incorporation of features from other embodiments.

The word "optionally" is used herein to mean "is provided in some embodiments and not provided in other embodiments". Any particular embodiment of the invention may include a plurality of "optional" features unless such features conflict.

As used herein, the singular form "a", "an" and "the" include plural references unless the context clearly dictates otherwise. For example, the term "a compound" or "at least one compound" may include a plurality of compounds, including mixtures thereof.

Throughout this application, various embodiments of this invention may be presented in a range format. It should be understood that the description in range format is merely for convenience and brevity and should not be construed as an inflexible limitation on the scope of the invention. Accordingly, the description of a range should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within that range, for example, 1, 2, 3, 4, 5, and 6. This applies regardless of the breadth of the range.

Whenever a numerical range is indicated herein, it is meant to include any cited numeral (fractional or integral) within the indicated range. The phrases "ranging/ranges between" a first indicate number and a second indicate number and "ranging/ranges from" a first indicate number "to" a second indicate number are used herein interchangeably and are meant to include the first and second indicated numbers and all the fractional and integral numerals therebetween.

As used herein the term "method" refers to manners, means, techniques and procedures for accomplishing a given task including, but not limited to, those manners, means, techniques and procedures either known to, or readily developed from known manners, means, techniques and procedures by practitioners of the chemical, pharmacological, biological, biochemical and medical arts.

It is appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable subcombination or as suitable in any other described embodiment of the invention. Certain features described in the context of various embodiments are not to be considered essential features of those embodiments unless the embodiment is inoperative without those elements.

The descriptions of the various embodiments of the present invention have been presented for purposes of illustration but are not intended to be exhaustive or limited to the embodiments disclosed. Many modifications and variations will be apparent to those of ordinary skill in the art without departing from the scope of the invention as defined by the appended claims. The terminology used herein was chosen to best explain the principles of the embodiments, the practical application or technical improvement over technologies found in the marketplace, or to enable others of ordinary skill in the art to understand the embodiments disclosed herein.

Various embodiments and aspects of the present invention as delineated hereinabove and as claimed in the claims section below find experimental support in the following examples.

### EXAMPLES

Generally, the nomenclature used herein, and the laboratory procedures utilized in the present invention include molecular, biochemical, microbiological, and recombinant DNA techniques. Such techniques are thoroughly explained in the literature. See, for example, "Molecular Cloning: A laboratory Manual" Sambrook et al., (1989); "Current Protocols in Molecular Biology" Volumes I-III Ausubel, R. M., ed. (1994); Ausubel et al., "Current Protocols in Molecular Biology", John Wiley and Sons, Baltimore, Maryland (1989); Perbal, "A Practical Guide to Molecular Cloning", John Wiley & Sons, New York (1988); Watson et al., "Recombinant DNA", Scientific American Books, New York; Birren et al. (eds.) "Genome Analysis: A Laboratory Manual Series", Vols. 1-4, Cold Spring Harbor Laboratory Press, New York (1998); methodologies as set forth in U.S. Pat. Nos. 4,666,828; 4,683,202; 4,801,531; 5,192,659 and 5,272,057; "Cell Biology: A Laboratory Handbook", Volumes I-III Cellis, J. E., ed. (1994); "Culture of Animal Cells - A Manual of Basic Technique" by Freshney, Wiley-Liss, N. Y. (1994), Third Edition; "Current Protocols in Immunology" Volumes I-III Coligan J. E., ed. (1994); Stites et al. (eds), "Basic and Clinical Immunology" (8th Edition), Appleton & Lange, Norwalk, CT (1994); Mishell and Shiigi (eds), "Selected Methods in Cellular Immunology", W. H. Freeman and Co., New York (1980); available immunoassays are extensively described in the patent and scientific literature, see, for example, U.S. Pat. Nos. 3,791,932; 3,839,153; 3,850,752; 3,850,578; 3,853,987; 3,867,517; 3,879,262; 3,901,654; 3,935,074; 3,984,533; 3,996,345; 4,034,074; 4,098,876; 4,879,219; 5,011,771 and 5,281,521; "Oligonucleotide Synthesis" Gait, M. J., ed. (1984); "Nucleic Acid Hybridization" Hames, B. D., and Higgins S. J., eds. (1985); "Transcription and Translation" Hames, B. D., and Higgins S. J., eds. (1984); "Animal Cell Culture" Freshney, R. I., ed. (1986); "Immobilized Cells and Enzymes" IRL Press, (1986); "A Practical Guide to Molecular Cloning" Perbal, B., (1984) and "Methods in Enzymology" Vol. 1-317, Academic Press; "PCR Protocols: A Guide To Methods And Applications", Academic Press, San Diego, CA (1990); Marshak et al., "Strategies for Protein Purification and Characterization - A Laboratory Course Manual" CSHL Press (1996). Other general references are provided throughout this document.

### Materials and Methods

### Animals

Male Brown Norway rats aged 12-16 weeks were housed under conventional conditions and used as both donors and recipients of limb heterotrophic isotransplantations. The Tel Aviv Sourasky Medical Center Institutional Animal Care and Use Committee approved all animal experiments.

### Surgical Procedure

### Limb Harvesting

Anesthesia was induced by inhalation of Isoflorane 2% and oxygen at a flow rate of 5 L/min in an induction cage. Anesthesia was maintained with inhalant 1-2% isoflurane. The donor surgical site was prepared, and a skin incision was made around the circumference of the right hindlimb at the level of the 1cm above knee. Firstly, the skin of the upper thigh was mobilized to expose the biceps femoris and adductor group of the medial thigh. All superficial muscle groups derived from the thigh but crossing knee were cut around knee joint to expose the knee joint. The tendon of the quadriceps femoris was transected above the iliac ligament. Gastrocnemius and soleus muscles were removed, but Achilles tendon was preserved. After opening the knee capsule, the knee was separated completely by cutting all ligaments. These muscles and ligaments were leaving a sufficient edge of residual tissue for secondary repair. Secondly, the sciatic nerve was found behind the stifle joint to expose the tibial nerve and the common peroneal nerve. After a tag suture of 10-0 nylon was placed, tibial nerve was transected in the mid-calf peroneal nerve was detached above fibulae capitulum. The nerves were preserving mesoneural tissue. Thirdly, the femoral vessels were isolated from the inguinal ligament to the level of the epigastric takeoff. The femoral vessels were then clamped above the previously placed suture tags and transected. Using a 22-gauge angiocatheter, approximately 5 mL of warm saline 0.9% and 50 U of heparin were manually perfused through the femoral artery, until the venous effluent was clear. Once detached, the donor limb (graft) was wrapped in moist gauze until it underwent vitrification. The donor animal was euthanized.

### Limb transplantation

Following freezing and warming recipient animal was anesthetized and prepared for surgery. An oblique incision, approximately 1.5 cm in length was made on the hip, slightly superior to the limb with exposure and division of the femoral vessels occurring further distally to preserve adequate length for approximation with the donor limb. The donor limb was transplanted by performing vascular anastomoses with simple interrupted sutures of 10-0 nylon. Muscle groups were approximated to the abdominal wall and with 6-0 prolene lactated Ringer's solution (5 mL, IP) was administered. The skin was closed with interrupted 4-0 nylon suture.

### Limb graft relocation to a below the knee position

### Below the knee amputation of the recipient's limb

The rats that received limbs were anesthetized, and the animals' right hind limbs and small of the back were shaved. An incision was made from waist to inner thigh area. Separate the femoral artery and femoral vein above the knee joint for anastomosis. The limbs after vitrification were fixed first for stable situation during anastomosis. The anastomotic vessels maintain proper tension.

### Below the knee positioning and connection of the cryopreserved limb

Ten to 14 days after the transplantation of the cryopreserved limb as a fifth limb an incision was made in the anterior tibial region of the calf on the recipient's limb on same side of the skin limb in order to expose the superficial muscles. Next a below the knee amputation of the recipient's limb was performed while retaining the recipient's gastrocnemius, soleus, Achilles tendon and the tibial nerve portion ending at ~1cm above the ankle position. The cryopreserved limb scar was cut along the original incision and the subcutaneous fascia and fibrous cord were separated until the vascular pedicles were completely free. The cryopreserved limb was then moved below the amputated knee joint. The cryopreserved at a below the knee position accordingly: First, the posterior capsule of the knee joint was sutured and connected. Secondly, the knee ligament was repaired; 1) the cruciate ligaments of the knee; 2) the collateral ligaments on both sides; 3) the anterior and left and right sacs of the knee joint. Thirdly, the patellar ligament and the Achilles tendon were sutured. Fourth, anastomosis of tibial nerve of the recipient and donor at 1 cm above the ankle was performed. Fifth, repair the superficial muscles (vastus medialis, vastus lateralis, biceps femoris, semitendinosus, semimememus and the adductor group). Sixth, the skin of the adjusted receiving area was sutured with the skin of the cryopreserved limb.

### Vascularized groin flap

### Flap harvest

In the donor, 3 × 4 cm skin flaps based on the femoral artery and vein are harvested from the groin, including the underlying panniculus cornosum and inguinal fat tissue at the plane just above the abdominal muscles. Following harvesting, flaps are perfused with heparinated Ringer lactate solution (50 U heparin in 10ml Ringer lactate) until the venous outflow become clear.

### Flap transplantation

The same-sized defect was created on the right side of recipient rat. After freezing and thawing the inset of the flap, arterial anastomosis of the femoral artery of the recipient and donor is performed in end-to-end fashion with 10/0 nylon sutures under operating-microscope magnification, using standard microsurgical techniques. Next, the flap is sutured to the defect using a 4/0 absorbable suture (Vicryl ,Ethicon, Inc.).

### Limb vitrification procedure

The harvested limb was manually perfused for 0.5 minute with 5 ml of each of the following solutions:
1. Equilibration solution (E.S): 7.5% Ethylene Glycol (EG) + 7.5% DMSO + 20% fetal calf serum (FCS) in Wisconsin static preservation solution (SPS-1, organ preservation systems).
2. Vitrification solution (V.S): 20% EG+20% DMSO + 20% FCS + 0.5 M Trehalose in SPS-1.

After perfusion has ended the limb was inserted into an empty cryobag (CryoMACS^{®} freezing bags, Miltenyi Biotec, Bergisch Gladbach, Germany), 5 ml of V.S were added, and the bag was vacuumed, and heat sealed. The bag was then inserted into LN slush (between -205 to -210 °C) using the VitMaster device (IMT, Nes-Ziona, Israel) for 4 seconds followed by its placement in LN vapor at 1 cm from LN surface for 2 min or up to 2 hours as indicated.

### Limb warming procedure

The frozen bag was inserted into a water bath heated to 38 °C until the limb was thawed (about 2-3 minutes). The bag was opened, and the limb taken out and inserted into of SPS-1 supplemented with 1 M sucrose for 2 minutes and then into saline for additional two minutes.

The limb was then perfused manually with the following wash solutions (1 ml/0.5 min per solution): Wash solution 1 (WS1): 1 M sucrose and 20% FBS in SPS-1, WS2: 1/1 dilution of WSI in SPS-1, WS3: 1/1 dilution of WS2 in SPS-1, WS4: 1/1 dilution of WS3 in SPS-1. Following WS4 the limb is washed with 10-20 ml saline.

### Vascularized groin flap vitrification procedure

The harvested flap was manually perfused for 0.5 minute with 1 ml of each of the following solutions:
1. Equilibration solution (E.S): 7.5% Ethylene Glycol (EG) + 7.5% DMSO + 20% fetal calf serum (FCS) in Wisconsin static preservation solution (SPS-1, organ preservation systems).
2. Vitrification solution (V.S): 20% EG+20% DMSO + 20% FCS + 0.5M Trehalose in SPS-1.

After perfusion has ended the flap was inserted into an empty cryobag (CryoMACS^{®} freezing bags, Miltenyi Biotec, Bergisch Gladbach, Germany), 1 ml of V.S were added, and the bag was vacuumed, and heat sealed. The bag was then inserted into LN slush (between -205 to -210 °C) using the VitMaster device (IMT, Nes-Ziona, Israel) for 3 seconds followed by its placement in LN vapor at 1 cm from LN surface for 2 min and then transferred to storage at a -80 °C freezer for 24 hours or 7-9 days. Alternatively, the bag with the flap was immediately placed in LN vapor for 30 minutes prior to warming.

### Flap warming procedure

The frozen bag was inserted into a water bath heated to 38 °C until the limb was thawed (about 30 seconds). The bag was opened, and the flap was taken out and inserted into SPS-1 supplemented with 1 M sucrose for 2 minutes and then into saline for additional two minutes.

The limb was then perfused manually with the following wash solutions (1 ml/0.5 min per solution): Wash solution 1 (WS1): 1M sucrose and 20% FBS in SPS-1, WS2: 1/1 dilution of WSI in SPS-1, WS3: 1/1 dilution of WS2 in SPS-1, WS4: 1/1 dilution of WS3 in SPS-1. Following WS4 the limb is washed with 10-20 ml saline.

### Post-transplantation treatment

All transplanted rats were dressed in an Elizabethan collar from post operation days 2 (POD2) to POD30 and treated daily until POD7 with intraperitoneal injections of Clexane (75 IU/kg) and Baytril (5 mg/kg).

### Histology

Limb and flap samples were harvested post animal sacrifice and paraffin sections were prepared. Sections were stained by Hematoxylin and Eosin (H&E), and images were captured by Philips image management system 3.3.1HF1.

### Nerve regeneration immunohistochemistry staining

Tibial nerve, including the proximal and distal coaptation sites, was removed and fixed in 2.5% paraformaldehyde (PFA). Nerve samples were dissected into two segments proximal to nerve anastomosis (recipient portion) and from the 0.5 cm distal to nerve anastomosis (donor cryopreserved portion). The tissues were then embedded in a paraffin block and sectioned at approximately 5 µm thickness. Slides were stained with anti-choline acetyltransferase antibody (ChAT as a marker for motoric neurons fibers (Goat anti CHAT AB144 Millipore), and anti neuro-filament (NF) antibody, as a general neuron fibers marker (CD-NB300-133 Novus). DAPI was used for non-specific cell nucleus staining. The two stains (ChAT and NF) are performed separately, in order to evaluate the number of intact motoric fibers compared to the overall number of neuron fibers. The stained sections were examined and photographed using a fluorescence OR microscope (Eclipse Ni-U; Nikon, Tokyo, Japan), equipped with Plan Fluor objectives (6×, 20×) connected to a camera (DS-Qi1, NiKOn). A blinded digital morphometric analysis was performed by a pathologist and a quantitative cell count was conducted using a digital system. Digital images were collected and analyzed using Image Pro software. Images were assembled using Adobe Photoshop (Adobe Systems, San Jose, CA).

### EXAMPLE 1

### Long-term survival of cryopreserved vascularized groin flaps following transplantation

The major parameters of the large tissue vitrification protocol were calibrated using the vascularized groin flap rat model, which simulates vascularized skin flaps used in routine plastic reconstructive surgery practice. Calibration of the cryoprotectant perfusion time demonstrated that prolonged perfusion (>5 min) resulted in flap death within the first 3 days of transplantation, while perfusion times shorter than 5 min allowed for long-term groin flap survival (data not shown). To further reduce CPA exposure, the groin flap was rapidly cooled to subzero temperatures using LN slush. To minimize tissue cracking/fractures upon exposure to LN slush, groin flaps were cooled in LN slush for increasing intervals and damage was evaluated. Following up to 7 sec slush exposure and 2 minutes LN vapor freezing, blood reperfusion of vascularized groin flaps was observed, and no signs of bleeding or damage were apparent. In contrast, multiple bleeding points indicating damage to blood vessels, were noted in flaps exposed to LN slush for 10 sec followed by 2min LN vapor (**Fig. 1A**). Further extension of flap exposure to LN slush to 20 seconds led to complete breakage of blood vessels, excluding flap transplantation following worming (**Fig. 1A**). In accordance at the next stage flaps were perfused, cooled briefly (3 seconds) in LN slush, cooled to ~ -60 °C in LN vapor for 5 minutes and immediately transferred to a -80 °C freezer for long-term cooling for 24 hours (**Fig. 1C**) or 9 days (**Fig. 1D**). Following cryopreservation flaps were warmed, washed, retranslated to a syngeneic recipient and their survival was followed. As can be seen flap cryopreserved either for 24 hours or 9 days demonstrated long-term viability that included hair growth from POD21. Interestingly, all cryopreserved flaps demonstrated a white "milky" coloration of the skin that was accompanied sometimes with white colored hair growth. The integrity of the different skin layers and subcutaneous fat tissue was further demonstrated in histology performed at POD12 flaps cryopreserved for 24 hours (**Figs. 1Ea-1Ec**) or 9 days (**Figs. 1Ed-1Ef**). Despite their good survival, 9 days cryopreserved flaps demonstrated increased clinical signs of suffering compared to flaps cryopreserved for 24 hours indicating, as could be anticipated, to the instability of preserving live tissue at temperatures higher than the cryoprotectants Tg'.

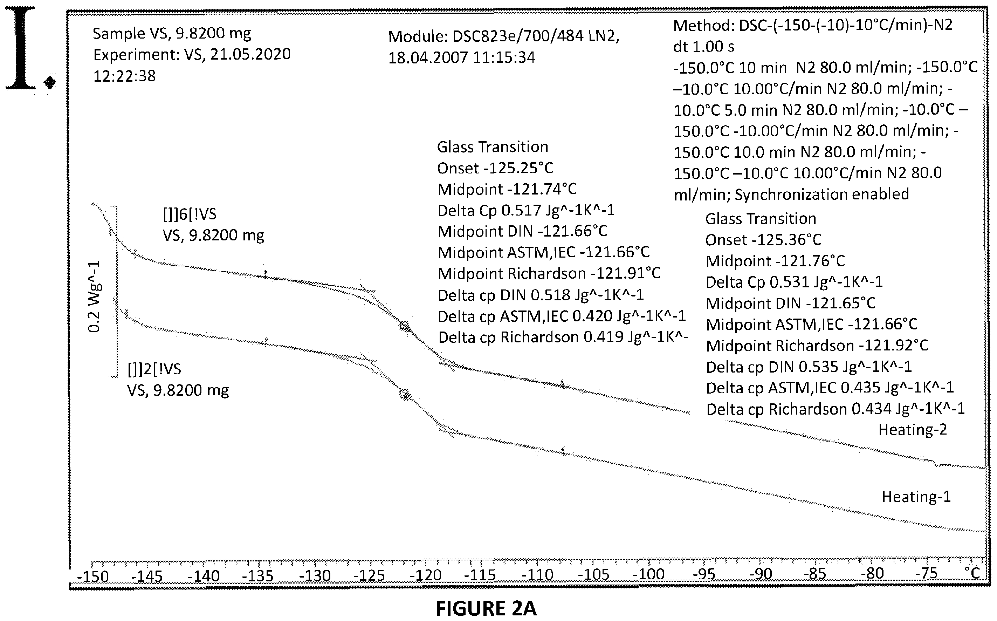

In attempt to allow a more reliable long-term cryopreservation technique the inventors evaluated the effect of cooling a flap to the more stable vitrification solution Tg', which was determined to be ~ -121 °C (**Fig. 2AI**). Due to the relatively thin nature of the flap and to its rapid cooling at LN vapor we removed the LN slush freezing stage and the entire freezing of the flap to Tg' was performed by its incubation for 30 min in LN vapor allowing a cooling rate of ~ 80 °C/minute (**Fig.2AII**), which was comparable to other reports of successful tissue freezing (**Fig. 2B**). Cooling the flap to the Tg' of the vitrification solution was successful as is demonstrated from both its long-term survival following transplantation (**Fig. 2CI**) and from the normal appearance of all skin layers and subcutaneous fat in post operation day 12 (POD12) histological assessments (**Fig. 2CII**). Thus, rapid cooling to and long-term storage at the Tg' can provide an efficient alternative to LN slush rapid cooling and cryopreservation.

### EXAMPLE 2

### Long-term survival of cryopreserved vascularized hind limb following transplantation

Next the novel cryopreservation protocol was applied to the larger and more complex hind limb model. Due to the larger volume of the limb as compared to the groin flap, a short (4 sec) LN slush cooling phase was included before the more gradual LN vapor phase (**Fig**. **2A**). This two-phase cooling strategy allowed for rapid cooling to subzero temperatures (-4 °C), followed by a more gradual cooling (7 °C/min) to -70 °C without tissue damage or cracking, as was evident from the long-term survival of the limb after transplantation (30 days), normal hair growth and peripheral blood perfusion (**Figs. 2B-****2C**). Importantly, in addition to normal skin histology, a large portion of limb muscle demonstrated normal structure after freezing, transplantation (POD 0) and up to 30 days post-implantation (**Fig. 2BII**) indicating to the feasibility of functional limb recovery following once reinnervation is applied.

### EXAMPLE 3

### Long-term limb survival after cryopreservation at Tg'

As was demonstrated for flaps, the inventors next examined the ability of a limb to survive freezing to the more stable Tg' that can secure its long-term survival when stored in LN vapor or in any other freezing device that can retain such a temperature. Limbs were subjected to the vitrification protocol (**Fig. 3A**), with a short (4 sec) LN slush cooling phase followed by 2 hours in the LN vapor phase, sufficient to reduce limb temperature to the Tg'. After transplantation, the cryopreserved limb survived until the termination of the experiment at POD28 demonstrating hair regrowth (**Fig. 3B**) and good peripheral blood perfusion (**Fig. 3C**). As can be seen in **Fig. 3D** a large portion of the limb, which was buried subcutaneously during transplantation, demonstrated normal well perfused appearance of the subcutaneous muscle area. Biopsies taken following sacrifice showed normal skin structure (**Fig. 3E**). As muscle survival is essential to functional limb recovery once reinnervation is achieved and since muscle is considered to be the most sensitive limb tissue, muscle survival and recovery following cryopreservation was evaluated and compared to muscle in unfrozen transplanted controls. Biopsies taken from different limb portions of 9 limbs and histological sections were assessed following H&E staining. As can be seen in Fig. 6A and B muscle status following cryopreservation at ~ -80 °C or Tg was not significantly different from muscle status in fresh limb transplants perfused by either saline or CPAs prior to transplantation (**Figs. 6A-6B**). All the specimens showed normal skin, subcutaneous and fascia aspects. Most of the muscle fascicles showed normal architecture and preserved myofibers with peripheral nuclei. A few fascicles showed signs of necrosis and regeneration with central nuclei. Some fascicles showed edema and perimysial/endomysial inflammatory infiltrate composed of macrophages and lymphocytes. Some fascicles showed zonal neurogenic atrophy. Ultimately, some fascicles were replaced by fatty tissue. Fresh controls and in cryopreserved limbs exhibited similar features following transplantation and no significant differences were found, indicating the efficacy of our cryopreservation method in preserving muscle integrity. In agreement with the histological findings, long-term survival of limbs cryopreserved by this protocol was significantly superior to that of limbs cryopreserved by DF or cooled to temperatures lower than vitrification solution Tg (**Fig. 6C**).

### EXAMPLE 4

### Transplantation of a cryopreserved limb demonstrates nerve regeneration and functional sensation

To demonstrate the ability of a cryopreserved limb to regain its functionality, a novel two-stage transplantation model was developed, in which the cryopreserved limb was first transplanted as a fifth limb until its recovery from the transplantation procedure (~POD12) and then transferred to replace a below the knee amputation (**Fig. 4A**). Importantly, during relocation of the limb from the rat's waist, where it was originally transplanted, to the below the knee position, the limb remained connected to the blood vessels, precluding the need for blood vessel anastomosis and consequent limb ischemia. Following its relocation and connection to the recipient's knee, anastomosis of the recipient donor tibial nerve was performed in proximity to the transplanted limb ankle. By 21 days post-limb relocation to the under the knee position, the rat was able to freely walk on its transplanted limb and the limb was viable (**Fig. 4B**). Although use of the cryopreserved limb for walking was mainly supported by the recipient's muscles, it demonstrated the ability of the limb to support the rat's weight and functional walking. In addition, use of the limb may be important to improve nerve regeneration similarly to patient physiotherapy following hand transplantation. Importantly, at 21 days following nerve reconnection, the nerve regained pain sensation in the proximal paw area (data not shown). Nerve regeneration was further demonstrated by immunohistochemical analysis, which showed neurofilament and motor neuron staining at ~0.5 cm distal to nerve anastomosis (**Fig. 4C**).

### Discussion

Successful cryopreservation of large tissues, limbs or organs has the potential to revolutionize the field of medical reconstruction and organ transplantation. The inventors recently reported on successful short-term (3 days) survival of a rat hind limb following cryopreservation by either directional freezing or vitrification. The present work demonstrated, for the first time, the successful long-term survival of a vascularized groin flap and a hind limb following cryopreservation and transplantation in a rat model. This was achieved using a novel cryopreservation protocol, which modified existing vitrification protocols in three important parameters. Firstly, it involved rapid cryoprotectant perfusion at room temperature. Secondly, freezing was performed in two stages, with rapid cooling to subzero temperature (~360 °C/min), followed by a more gradual cooling (~ -8 °C/min) to Tg' (-121 °C). Lastly, the long-term preservation temperature was at the solution's Tg' rather than at the lower liquid nitrogen (-180 °C) or at low liquid nitrogen vapor freezing conditions (<-150 °C) that are present in LN based dry shipper containers. Limb viability was demonstrated by hair growth, peripheral blood perfusion and normal skin, fat and muscle histology at POD28-32. Furthermore, using a novel below the knee transplantation model which included reinnervation of the limb, nerve regeneration and the return of functional sensation in the cryopreserved limb were demonstrated. Altogether, these findings provide a strong foundation for future development of large tissue, limb and organ cryopreservation protocols.

One of the advantages of cryopreservation of a vascularized tissue/limb/organ is that in contrast to non-vascularized tissue, the limitation of mass transfer of cryoprotectants can be solved by artery perfusion allowing for their rapid and efficient distribution. Due to the toxicity of high concentration cryoprotectants (40% V/V in the herein disclosed vitrification solution) this work assessed the effectiveness of cryoprotectant perfusion at room temperature, with perfusion time reduced to a minimum. This decision was based on preliminary experiments, which demonstrated that only flaps undergoing rapid perfusion <5 minutes retained their viability after transplantation, most probably due to the reduced damage inflicted to their blood vessels by cryoprotectants. To further reduce cryoprotectants toxicity and chilling injury, a cooling step involving LN slush was introduced and provided for limb heat transfer of over 200 °C/min, reaching subzero temperatures within 4 sec.

The only practical use of vitrification to date is in the cryopreservation of small tissues and cells (i.e. oocytes, sperm, embryos), which benefit from rapid cooling and warming, with almost no ice crystal growth, and damage-free cryopreservation using relatively low cryoprotectant concentrations. In such cases, ice crystal growth is inhibited by the rapidness of heat transfer in the presence of cryoprotectants. However, such rapid cooling and warming is currently impossible in large tissues. The present invention provides a two-stage cooling protocol, with short-term liquid nitrogen slush dipping allowing for rapid achievement of subzero temperatures, followed by slower cooling (7 °C/min) in liquid nitrogen vapor. Indeed, in contrast to the herein disclosed successful two stages gradual freezing (~7 °C/minute) protocol, the inventors attempts to rapidly freeze limbs to ~ -80 °C by LN slush dipping (~400 °C/minute) were unsuccessful, leading to limb death at POD2 due to blood clot formation (data not shown).

Repeated attempts to perform short-term storage of limbs or flaps in MVE dry shipper at -186 °C were unsuccessful leading to their rapid death following transplantation. The presented results demonstrated that cryopreservation was most successful when tissue was maintained at near Tg' temperatures. In order to standardize the proposed two-steps vitrification procedure, the inventors developed a new vitrification device which controls rapid cooling in LN slush for a predetermined period of time, and then increases the temperatures to Tg' for long-term storage (**Figs. 6-14**). The simplicity of the suggested protocol and device will enable a simple method for immediate cryopreservation of amputated limbs and tissues in both hospital and combat settings.

Modern reconstructive surgery relies primarily on autologous body parts (e.g., vascularized skin flaps, bones and nerves) from donor sites where their harvest will not cause disability. Despite its enormous success, reconstruction is still limited when the damage is massive and even more so, when it occurs at complex structures, such as the limbs or face. The recent emergence of VCA has extended the limits of reconstruction by utilizing composite graft from foreign brain dead donors. However, despite its successes, routine clinical use of VCA is delayed by the massive immune rejection inflicted by the recipient on the foreign graft, requiring lifelong immunosuppressive drug use to allow graft survival, often leading to severe adverse effects and sometimes even mortality. The inventors suggest that immediate cryopreservation of amputated limbs and vascularized tissues following trauma will enable postponement of autologous reconstruction/replantation until after patient stabilization or until conditions allow such a complex procedure (a skilled microsurgical team + microsurgical operation room and use of tissue contaminated during trauma). Moreover, unlike solid organ availability, which is short of the demand, limbs, which are in lower demand, may be stored/banked for future use. Such banking will advance the VCA field by allowing for increased HLA matching between donor and recipient, which will reduce the risk of allograft rejection. It will also remove the strict time constrains posed by limited post-harvest limb viability (maximum 6 hours) and will allow a planned transplantation procedure. Furthermore, unlike solid organs, limb matching also requires aesthetic matching, which can be improved through limb banking.

In line with this approach, the current research has made additional steps towards the clinical use of cryopreservation to enhance complex tissue reconstruction following trauma. Using the herein disclosed cryopreservation protocol, long-term survival of both limbs and vascularized flaps following freezing to ~Tg' temperature (<-100 °C) and transplantation was achieved. This long-term survival of cryopreserved tissue, achieved for the first time, sets the basis for preservation of large living tissue for time periods longer than the 72 hours, broadening the window for lifesaving procedures. Importantly, beneficial reconstruction does not have to depend on complete limb replantation but also on reconstruction using smaller tissue components (vascularized skin flaps and bone grafts, nerves, skin grafts etc.) which are often lacking following massive trauma and precluding donor site morbidity. Importantly in addition to the mere limb survival, histological analysis was able to demonstrate viable muscle following cryopreservation and long-term transplantation, indicating the feasibility of functional cryopreserved limb recovery, which is dependent on muscle recovery. Despite the good preservation of whole muscle bundles, >POD10 histological analysis also demonstrated muscle cell regeneration, which may have been in response to freezing-induced damage or muscle denervation due to nerve disturbance during limb amputation. Further support of the feasibility of limb function recovery following cryopreservation was achieved using our novel two-stage transplantation model that allowed us to show the regeneration of nerves and limb sensation following below the knee replantation and nerve anastomosis. Taken together, the presented findings demonstrate the feasibility of our cryopreservation approach to dramatically improve functional limb replantation following traumatic injury or cryobanking of limb allografts.

Although the invention has been described in conjunction with specific embodiments thereof, it is evident that many alternatives, modifications and variations will be apparent to those skilled in the art. Accordingly, it is intended to embrace all such alternatives, modifications and variations that fall within the scope of the appended claims.

## Claims

1. A method for cryopreserving a biological sample, comprising the steps of:
A. contacting a biological sample with a vitrification solution (VS) in a volume per volume (v/v) ratio ranging from 50:1 to 1:1;
B. first subjecting said biological sample of step (a) to a temperature ranging from -210 °C to -197 °C for a period of 3-10 seconds; and
c. second subjecting said biological sample of step (b) to a temperature being equal to or greater than a transition glass point temperature (Tg) of said VS and ranging from -140 °C to -100 °C for a period of at least 3 minutes;
thereby cryopreserving said biological sample.

2. The method of claim 1, wherein said biological sample comprises a tissue or an organ being vascularized, innervated, or both.

3. The method of claim 1 or 2, wherein said biological sample comprises a limb.

4. The method of any one of claims 1 to 3, further comprising preserving said biological sample after said second subjecting comprising further cooling said biological sample at a rate ranging from -1 °C/min to -10 °C/min to a temperature below said Tg or between -197 °C to -150 °C.

5. The method of any one of claims 1 to 4, wherein said biological sample obtained following step (a) is submerged in said VS, covered by said VS, or both, and optionally wherein said biological sample obtained following step (a) is essentially devoid of air.

6. The method of any one of claims 1 to 5, wherein said contacting is under vacuum conditions, and optionally wherein said contacting is in an elastic bag.

7. The method of any one of claims 1 to 6, wherein said biological sample obtained following step (b) comprises an outer surface in contact with said VS, wherein said outer surface is **characterized by** having a temperature ranging from -20 °C to 0 °C.

8. The method of any one of claims 1 to 7, wherein said first subjecting is freezing at a rate of -330 °C/min to -500 °C/min, and optionally wherein said first subjecting is in a slush of a cryogenic liquid or under a cryogenic condition of -220 °C to -150 °C.

9. The method of any one of claims 1 to 8, wherein said second subjecting is freezing at a rate of -3 °C/min to -10 °C/min, optionally wherein said second subjecting is in: (a) vapors of a cryogenic liquid; or (b) a cooling condition providing a temperature ranging from -85 °C to -75 °C followed by vapors of a cryogenic liquid, and optionally wherein said cooling condition providing a temperature ranging from -85 °C to -75 °C comprises a cooling liquid having a temperature ranging from -85 °C to -75 °C.

10. The method of any one of claims 1 to 9, wherein said period of at least 3 minutes of step (c) is at least 30 minutes, optionally wherein said method further comprises a step preceding step (a), comprising perfusing said biological sample with said VS, and optionally wherein said perfusing is at room temperature for a period of up to 5 minutes.

11. The method of any one of claims 1 to 10, wherein said VS comprises at least one: permeating cryoprotecting agent, non-permeating cryoprotecting agent, or a combination thereof, and optionally further comprises: a macromolecule, an antioxidant, a medium, or any combination thereof.

12. The method of any one of claims 1 to 11, wherein said VS comprises: 15-25% (w/v) ethylene glycol, 15-25% (v/v) dimethyl sulfoxide, 15-25 (v/v) fetal bovine serum, and 0.3-0.7 M trehalose, all of which in Wisconsin static preservation solution, and optionally wherein said method further comprises a step (d) comprising preserving said cryopreserved biological sample for a period of at least 24 hours.

## Patentansprüche

1. Verfahren zur Kryokonservierung einer biologischen Probe mit den Schritten:
A. Inkontaktbringen einer biologischen Probe mit einer Vitrifikationslösung (VS) in einem Volumenverhältnis (v/v) von 50:1 bis 1:1;
B. erstes Aussetzen der biologischen Probe aus Schritt (a) einer Temperatur im Bereich von -210 °C bis -197 °C für einen Zeitraum von 3 bis 10 Sekunden; und
c. anschließendes Aussetzen der biologischen Probe aus Schritt (b) einer Temperatur, die gleich oder größer als die Glasübergangstemperatur (Tg) der VS ist und im Bereich von -140 °C bis -100 °C liegt, für einen Zeitraum von mindestens 3 Minuten; wodurch die biologische Probe kryokonserviert wird.

2. Verfahren nach Anspruch 1, bei dem die biologische Probe ein Gewebe oder ein Organ umfasst, das vaskularisiert, innerviert oder beides ist.

3. Verfahren nach Anspruch 1 oder 2, bei dem die biologische Probe einen Körperteil umfasst.

4. Verfahren nach einem der Ansprüche 1 bis 3, wobei das Verfahren ferner das Konservieren der biologischen Probe nach dem zweiten Aussetzen umfasst, wobei die biologische Probe mit einer Geschwindigkeit im Bereich von -1 °C/min bis -10 °C/min weiter auf eine Temperatur unterhalb der Tg oder zwischen -197 °C und -150 °C abgekühlt wird.

5. Verfahren nach einem der Ansprüche 1 bis 4, bei dem die nach Schritt (a) erhaltene biologische Probe in die VS eingetaucht, mit der VS bedeckt oder beides wird und bei dem die nach Schritt (a) erhaltene biologische Probe optional im Wesentlichen luftfrei ist.

6. Verfahren nach einem der Ansprüche 1 bis 5, bei dem das Inkontaktbringen unter Vakuumbedingungen erfolgt und bei dem das Inkontaktbringen optional in einem elastischen Beutel erfolgt.

7. Verfahren nach einem der Ansprüche 1 bis 6, bei dem die nach Schritt (b) erhaltene biologische Probe eine mit der VS in Kontakt stehende Außenfläche aufweist, wobei die Außenfläche **dadurch gekennzeichnet ist, dass** sie eine Temperatur im Bereich von -20 °C bis 0 °C aufweist.

8. Verfahren nach einem der Ansprüche 1 bis 7, bei dem das erste Aussetzen das Gefrieren mit einer Geschwindigkeit von -330 °C/min bis -500 °C/min umfasst und optional bei dem das erste Aussetzen in Slush einer kryogenen Flüssigkeit oder unter kryogenen Bedingungen von -220 °C bis -150 °C erfolgt.

9. Verfahren nach einem der Ansprüche 1 bis 8, bei dem das zweite Aussetzen ein Einfrieren mit einer Geschwindigkeit von -3 °C/min bis -10 °C/min ist, und das zweite Aussetzen optional erfolgt in: (a) Dämpfen einer kryogenen Flüssigkeit; oder (b) einem Kühlzustand, der eine Temperatur im Bereich von -85 °C bis -75 °C bereitstellt, gefolgt von Dämpfen einer kryogenen Flüssigkeit, und wobei optional der Kühlzustand, der eine Temperatur im Bereich von -85 °C bis -75 °C bereitstellt, eine Kühlflüssigkeit mit einer Temperatur im Bereich von -85 °C bis -75 °C umfasst.

10. Verfahren nach einem der Ansprüche 1 bis 9, bei dem der Zeitraum von mindestens 3 Minuten in Schritt (c) mindestens 30 Minuten beträgt, wobei das Verfahren optional einen Schritt vor Schritt (a) umfasst, bei dem die biologische Probe mit der VS perfundiert wird, und wobei die Perfusion optional bei Raumtemperatur über einen Zeitraum von bis zu 5 Minuten erfolgt.

11. Verfahren nach einem der Ansprüche 1 bis 10, bei dem die VS ein durchdringendes Kryoprotektivum, ein nicht durchdringendes Kryoprotektivum und/oder eine Kombination davon umfasst, und optional zusätzlich ein Makromolekül, ein Antioxidans, ein Medium oder eine beliebige Kombination davon umfasst.

12. Verfahren nach einem der Ansprüche 1 bis 11, bei dem die VS umfasst: 15-25 % (w/v) Ethylenglykol, 15-25 % (v/v) Dimethylsulfoxid, 15-25 % (v/v) fötales Rinderserum und 0,3-0,7 M Trehalose, die alle in einer Wisconsin-Static-Preservation-Lösung enthalten sind, und wobei das Verfahren optional einen weiteren Schritt (d) umfasst, der das Konservieren der kryokonservierten biologischen Probe für einen Zeitraum von mindestens 24 Stunden umfasst.

## Revendications

1. Procédé de cryoconservation d'un échantillon biologique, comportant les étapes suivantes :
A. la mise en contact d'un échantillon biologique avec une solution de vitrification (VS) selon un rapport volume par volume (v/v) allant de 50:1 à 1:1 ;
B. une première soumission dudit échantillon biologique de l'étape (a) à une température allant de -210 °C à -197 °C pendant une période de 3 à 10 secondes ; et
c. une deuxième soumission dudit échantillon biologique de l'étape (b) à une température supérieure ou égale à une température du point de transition vitreuse (Tg) de ladite VS et allant de -140 °C à -100 °C pendant une période d'au moins 3 minutes ;
pour ainsi cryoconserver ledit échantillon biologique.

2. Procédé selon la revendication 1, dans lequel ledit échantillon biologique comporte un tissu ou un organe vascularisé, innervé ou les deux.

3. Procédé selon la revendication 1 ou 2, dans lequel ledit échantillon biologique comporte un membre.

4. Procédé selon l'une quelconque des revendications 1 à 3, comportant en outre la conservation dudit échantillon biologique après ladite deuxième soumission comportant un refroidissement supplémentaire dudit échantillon biologique à une vitesse allant de -1 °C/min à -10 °C/min à une température inférieure à ladite Tg ou comprise entre -197 °C et -150 °C.

5. Procédé selon l'une quelconque des revendications 1 à 4, dans lequel ledit échantillon biologique obtenu suite à l'étape (a) est immergé dans ladite VS, couvert par ladite VS ou les deux, et facultativement dans lequel ledit échantillon biologique obtenu suite à l'étape (a) est essentiellement dépourvu d'air.

6. Procédé selon l'une quelconque des revendications 1 à 5, dans lequel ladite mise en contact est effectuée dans des conditions de vide, et facultativement dans lequel ladite mise en contact est effectuée dans un sac élastique.

7. Procédé selon l'une quelconque des revendications 1 à 6, dans lequel ledit échantillon biologique obtenu suite à l'étape (b) comporte une surface externe en contact avec ladite VS, dans lequel ladite surface externe est **caractérisée en ce qu'**elle présente une température allant de -20 °C à 0 °C.

8. Procédé selon l'une quelconque des revendications 1 à 7, dans lequel ladite première soumission est une congélation à une vitesse de -330 °C/min à -500 °C/min, et facultativement dans lequel ladite première soumission est effectuée dans une bouillie d'un liquide cryogénique ou dans une condition cryogénique de -220 °C à -150 °C.

9. Procédé selon l'une quelconque des revendications 1 à 8, dans lequel ladite deuxième soumission est une congélation à une vitesse de -3 °C/min à -10 °C/min, facultativement dans lequel ladite deuxième soumission est effectuée dans : (a) des vapeurs d'un liquide cryogénique ; ou (b) une condition de refroidissement assurant une température allant de -85 °C à -75 °C suivie de vapeurs d'un liquide cryogénique, et facultativement dans lequel ladite condition de refroidissement assurant une température allant de -85 °C à -75 °C comporte un liquide de refroidissement ayant une température allant de -85 °C à -75 °C.

10. Procédé selon l'une quelconque des revendications 1 à 9, dans lequel ladite période d'au moins 3 minutes de l'étape (c) est d'au moins 30 minutes, facultativement dans lequel ledit procédé comporte en outre une étape précédant l'étape (a), comportant la perfusion dudit échantillon biologique avec ladite VS, et facultativement dans lequel ladite perfusion est à température ambiante pendant une période allant jusqu'à 5 minutes.

11. Procédé selon l'une quelconque des revendications 1 à 10, dans lequel ladite VS comporte au moins : un agent cryoprotecteur pénétrant, un agent cryoprotecteur non pénétrant ou une combinaison de ceux-ci, et comporte en outre facultativement : une macromolécule, un antioxydant, un milieu ou toute combinaison de ceux-ci.

12. Procédé selon l'une quelconque des revendications 1 à 11, dans lequel ladite VS comporte : 15-25 % (p/v) d'éthylène glycol, 15-25 % (v/v) de diméthylsulfoxyde, 15-25 (v/v) de sérum fœtal bovin et 0,3-0,7 M de tréhalose, le tout dans une solution de conservation statique Wisconsin, et facultativement dans lequel ledit procédé comporte en outre une étape (d) comportant la conservation dudit échantillon biologique cryoconservé pendant une période d'au moins 24 heures.
